(19) Europäisches Patentamt
European Patent Office
Office européen des brevets

(11) **EP 2 569 388 B1**

(12) **FASCICULE DE BREVET EUROPEEN**

(45) Date de publication et mention
de la délivrance du brevet:
**10.11.2021 Bulletin 2021/45**

(51) Int Cl.:
**C09K 5/04** $^{(2006.01)}$

(21) Numéro de dépôt: **11731422.9**

(22) Date de dépôt: **18.04.2011**

(86) Numéro de dépôt international:
**PCT/FR2011/050884**

(87) Numéro de publication internationale:
**WO 2011/141656 (17.11.2011 Gazette 2011/46)**

(54) **FLUIDES DE TRANSFERT DE CHALEUR ET LEUR UTILISATION DANS DES ECHANGEURS DE CHALEUR A CONTRE-COURANT**

WÄRMEÜBERTRAGUNGSFLÜSSIGKEITEN UND IHRE VERWENDUNG IN GEGENLÄUFIGEN WÄRMETAUSCHERN

HEAT-TRANSFER FLUIDS AND USE THEREOF IN COUNTERCURRENT HEAT EXCHANGERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.05.2010 FR 1053675**

(43) Date de publication de la demande:
**20.03.2013 Bulletin 2013/12**

(73) Titulaire: **Arkema France**
**92700 Colombes (FR)**

(72) Inventeur: **RACHED, Wissam**
**F-69630 Chaponost (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**WO-A1-2009/150763      WO-A1-2010/119265**
**WO-A1-2011/101608      WO-A2-2010/059677**
**WO-A2-2011/101621      US-A1- 2006 243 944**
**US-A1- 2008 314 073**

**Description**

DOMAINE DE L'INVENTION

La présente invention concerne des fluides de transfert de chaleur adaptés pour être utilisés dans des échangeurs de chaleur à contre-courant.

ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Les systèmes de transfert de chaleur par compression de vapeur comprennent au moins deux échangeurs de chaleur, l'un dans lequel le fluide se vaporise, et l'autre dans lequel il se condense. Les échangeurs de chaleur peuvent être de type co-courant ou de type contre-courant.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Des fluides de transfert de chaleur actuellement utilisés sont le HFC-134a, le R404a (mélange ternaire de 52 % de HFC-143a, de 44 % de HFC-125 et de 4 % de HFC-134a), le R407c (mélange ternaire de 52 % de HFC-134a, de 25 % de HFC-125 et de 23 % de HFC-32) et le R410a (mélange binaire de 50 % de HFC-32 et de 50 % de HFC-125).

Il est toutefois nécessaire de mettre au point d'autres fluides de transfert de chaleur présentant un potentiel de réchauffement global (GWP) inférieur à celui des fluides ci-dessus, et présentant des performances équivalentes ou améliorées.

Le document WO 2007/002625 décrit des compositions à base de fluorooléfines, et notamment de HFO-1234yf ou de HFO-1234ze, dans diverses utilisations, et notamment en tant que fluides de transfert de chaleur. Le document ne précise pas le type d'échangeur de chaleur utilisé.

Le document WO 2007/126414 décrit de manière générale une grande variété de compositions à base de fluorooléfines et une grande variété d'utilisations de ces compositions. Le document ne précise pas le type d'échangeur de chaleur utilisé.

Les documents WO 2009/107364, WO 2009/110228 et WO 2009/116282 décrivent des appareils de réfrigération dans lesquels les réfrigérants utilisés sont des mélanges à base de HFO-1234yf et de HFC-32, éventuellement complété ou remplacé par d'autres composés tels que le HFC-125. Le type d'échangeur de chaleur utilisé n'est pas précisé.

Le document US 2009/0158771 décrit l'utilisation d'un mélange ternaire comprenant du HFC-32, du HFC-134a et du HFO-1243zf, dans une application de transfert de chaleur. Les coefficients de performance obtenus sont inférieurs à ceux du fluide pris pour référence, à savoir le HFC-134a. Le type d'échangeur de chaleur utilisé n'est pas précisé.

Le document WO 2009/150763 décrit un appareil de climatisation avec un échangeur de chaleur de type contre-courant, dans lequel le fluide de transfert de chaleur est un mélange d'un HFO-1234 et de HFC-32 ou de HFC-41.

Le document WO 2010/000993 décrit l'utilisation d'un mélange ternaire comprenant du HFO-1234yf, du HFC-32 et du HFC-134a, en tant que fluide de transfert de chaleur. Le document ne précise pas le type d'échangeur de chaleur utilisé.

Le document WO 2010/000994 décrit l'utilisation d'un mélange ternaire comprenant du HFO-1234yf, du HFC-32 et du HFC-152a, en tant que fluide de transfert de chaleur. Le document ne précise pas le type d'échangeur de chaleur utilisé.

Le document US 2008/0314073 décrit l'utilisation d'une composition comprenant au moins un hydrofluorocarbone et au moins une fluorooléfine, en tant que fluide de transfert de chaleur.

Le document US 2006/243944 décrit de nombreuses compositions à base de HFC-1234yf.

Le document WO 2010/059677 décrit des compositions comprenant du HFO-1234ze et du HFC-32, éventuellement avec au moins un des composés choisi(s) parmi le HFC-134a et HFC-125.

Le document WO 2011/101621 décrit une composition de transfert de chaleur comprenant du HFO-1234ze(E), du HFC-32 et du HFC-134a.

Le document WO 2011/101608 décrit une composition de transfert de chaleur comprenant du HFO-1234ze(E), du HFC-32 et du HFC-152a.

Toutefois, il existe encore un besoin de mettre au point d'autres fluides de transfert de chaleur présentant un GWP relativement faible, et présentant de bonnes performances énergétiques, notamment dans les applications utilisant des échangeurs de chaleur à contre-courant.

RESUME DE L'INVENTION

L'invention concerne en premier lieu une composition ternaire comprenant du difluorométhane, du 1,3,3,3-tétrafluoropropène et un composé dérivé d'hydrocarbure comportant au moins deux atomes de fluor et présentant une température d'ébullition comprise entre -30 et -20°C, qui est choisi parmi le 1,1-difluoroéthane.

Cette composition comprend :

- de 25 à 50 % de difluorométhane, de 2 à 35 % de 1,1-difluoroéthane et de 15 à 73 % de 1,3,3,3-tétrafluoropropène, idéalement de 35 à 50 % de difluorométhane, de 2 à 10 % de 1,1-difluoroéthane et de 40 à 63 % de 1,3,3,3-tétrafluoropropène ; ou
- de 65 à 96 % de difluorométhane, de 2 à 20 % de 1,1-difluoroéthane et de 2 à 25 % de 1,3,3,3-tétrafluoropropène, idéalement de 65 à 93 % de difluorométhane, de 2 à 10 % de 1,1-difluoroéthane et de 5 à 25 % de 1,3,3,3-tétrafluoropropène ; ou

- de 20 à 50 % de difluorométhane, de 2 à 65 % de 1,1-difluoroéthane et de 5 à 78 % de 1,3,3,3-tétrafluoropropène, idéalement de 25 à 50 % de difluorométhane, de 2 à 15 % de 1,1-difluoroéthane et de 35 à 73 % de 1,3,3,3-tétrafluoropropène ; ou
- de 65 à 93 % de difluorométhane, de 2 à 30 % de 1,1-difluoroéthane et de 5 à 33 % de 1,3,3,3-tétrafluoropropène, idéalement de 65 à 93 % de difluorométhane, de 2 à 10 % de 1,1-difluoroéthane et de 5 à 33 % de 1,3,3,3-tétrafluoropropène.

L'invention concerne également l'utilisation de la composition susmentionnée, en tant que fluide de transfert de chaleur dans un circuit de compression de vapeur.

Selon un mode de réalisation, le circuit de compression de vapeur comprend un échangeur de chaleur à contre-courant.

L'invention concerne également une composition de transfert de chaleur comprenant la composition susmentionnée en tant que fluide de transfert de chaleur, et un ou plusieurs additifs choisis parmi les lubrifiants, les stabilisants, les tensioactifs, les agents traceurs, les agents fluorescents, les agents odorants, les agents de solubilisation et leurs mélanges.

L'invention concerne également une installation de transfert de chaleur comprenant un circuit de compression de vapeur contenant la composition susmentionnée en tant que fluide de transfert de chaleur ou contenant une composition de transfert de chaleur susmentionnée.

Selon un mode de réalisation, l'installation susmentionnée comprend un échangeur de chaleur à contre-courant.

Selon un mode de réalisation, l'installation susmentionnée est choisie parmi les installations mobiles ou stationnaires de chauffage par pompe à chaleur, de climatisation, de réfrigération et de congélation.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est la composition selon l'invention.

Selon un mode de réalisation, le procédé susmentionné est un procédé de refroidissement d'un fluide ou d'un corps, dans lequel la température du fluide ou du corps refroidi est de -40°C à -10°C, et de préférence de -35°C à -25°C, de manière plus particulièrement préférée de - 30°C à -20°C, et dans lequel le fluide de transfert de chaleur comprend :

- de 25 à 50 % de difluorométhane, de 2 à 35 % de 1,1-difluoroéthane et de 15 à 73 % de 1,3,3,3-tétrafluoropropène, idéalement de 35 à 50 % de difluorométhane, de 2 à 10 % de 1,1-difluoroéthane et de 40 à 63 % de 1,3,3,3-tétrafluoropropène ; ou
- de 65 à 96 % de difluorométhane, de 2 à 20 % de 1,1-difluoroéthane et de 2 à 25 % de 1,3,3,3-tétrafluoropropène,
- idéalement de 65 à 93 % de difluorométhane, de 2 à 10 % de 1,1-difluoroéthane et de 5 à 25 % de 1,3,3,3-tétrafluoropropène ; ou

Selon un mode de réalisation, le procédé susmentionné est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C, et dans lequel le fluide de transfert de chaleur comprend :

- de 2 à 20 % de difluorométhane, de 2 à 85 % de 1,1-difluoroéthane et de 10 à 96 % de 1,3,3,3-tétrafluoropropène, idéalement de 5 à 15 % de difluorométhane, de 2 à 35 % de 1,1-difluoroéthane et de 50 à 93 % de 1,3,3,3-tétrafluoropropène ; ou
- de 20 à 50 % de difluorométhane, de 2 à 65 % de 1,1-difluoroéthane et de 5 à 78 % de 1,3,3,3-tétrafluoropropène, idéalement de 25 à 50 % de difluorométhane, de 2 à 15 % de 1,1-difluoroéthane et de 35 à 73 % de 1,3,3,3-tétrafluoropropène ; ou
- de 65 à 93 % de difluorométhane, de 2 à 30 % de 1,1-difluoroéthane et de 5 à 33 % de 1,3,3,3-tétrafluoropropène, idéalement de 65 à 93 % de difluorométhane, de 2 à 10 % de 1,1-difluoroéthane et de 5 à 33 % de 1,3,3,3-tétrafluoropropène ; ou

Selon un mode de réalisation, le procédé susmentionné est un procédé de chauffage d'un fluide ou d'un corps, dans lequel la température du fluide ou du corps chauffé est de 30°C à 80°C, et de préférence de 35°C à 55°C, de manière plus particulièrement préférée de 40°C à 50°C, et dans lequel le fluide de transfert de chaleur comprend :

- de 2 à 20 % de difluorométhane, de 2 à 85 % de 1,1-difluoroéthane et de 10 à 96 % de 1,3,3,3-tétrafluoropropène, idéalement de 5 à 15 % de difluorométhane, de 2 à 35 % de 1,1-difluoroéthane et de 50 à 93 % de 1,3,3,3-tétrafluoropropène ; ou
- de 20 à 50 % de difluorométhane, de 2 à 65 % de 1,1-difluoroéthane et de 5 à 78 % de 1,3,3,3-tétrafluoropropène, idéalement de 25 à 50 % de difluorométhane, de 2 à 15 % de 1,1-difluoroéthane et de 35 à 73 % de 1,3,3,3-tétrafluoropropène ; ou
- de 65 à 93 % de difluorométhane, de 2 à 30 % de 1,1-difluoroéthane et de 5 à 33 % de 1,3,3,3-tétrafluoropropène, idéalement de 65 à 93 % de difluorométhane, de 2 à 10 % de 1,1-difluoroéthane et de 5 à 33 % de 1,3,3,3-tétrafluoropropène ; ou

L'invention concerne également un procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition selon l'invention.

Selon un mode de réalisation dudit procédé de réduction d'impact environnemental, le fluide de transfert de chaleur initial est un mélange ternaire de 52 % de 1,1,1-trifluoroéthane, de 44 % de pentafluoroéthane et de 4 % de 1,1,1,2-tétrafluoroéthane ou un mélange ternaire de 52 % de 1,1,1,2-tétrafluoroéthane, de 25 % de pentafluoroéthane et de 23 % de difluorométhane, et dans lequel le fluide de transfert de chaleur final comprend :

- de 25 à 50 % de difluorométhane, de 2 à 35 % de 1,1-difluoroéthane et de 15 à 73 % de 1,3,3,3-tétrafluoropropène, idéalement de 35 à 50 % de difluorométhane, de 2 à 10 % de 1,1-difluoroéthane et de 40 à 63 % de 1,3,3,3-tétrafluoropropène ; ou
- de 20 à 50 % de difluorométhane, de 2 à 65 % de 1,1-difluoroéthane et de 5 à 78 % de 1,3,3,3-tétrafluoropropène, idéalement de 25 à 50 % de difluorométhane, de 2 à 15 % de 1,1-difluoroéthane et de 35 à 73 % de 1,3,3,3-tétrafluoropropène ; ou

Selon un autre mode de réalisation dudit procédé de réduction d'impact environnemental, le fluide de transfert de chaleur initial est un mélange binaire de 50 % de difluorométhane et de 50 % de pentafluoroéthane, et dans lequel le fluide de transfert de chaleur final comprend :

- de 65 à 96 % de difluorométhane, de 2 à 20 % de 1,1-difluoroéthane et de 2 à 25 % de 1,3,3,3-tétrafluoropropène, idéalement de 65 à 93 % de difluorométhane, de 2 à 10 % de 1,1-difluoroéthane et de 5 à 25 % de 1,3,3,3-tétrafluoropropène ; ou
- de 65 à 93 % de difluorométhane, de 2 à 30 % de 1,1-difluoroéthane et de 5 à 33 % de 1,3,3,3-tétrafluoropropène, idéalement de 65 à 93 % de difluorométhane, de 2 à 10 % de 1,1-difluoroéthane et de 5 à 33 % de 1,3,3,3-tétrafluoropropène ; ou

Selon un autre mode de réalisation dudit procédé de réduction d'impact environnemental, le fluide de transfert de chaleur initial est du 1,1,1,2-tétrafluoroéthane, et dans lequel le fluide de transfert de chaleur final comprend :

- de 2 à 20 % de difluorométhane, de 2 à 85 % de 1,1-difluoroéthane et de 10 à 96 % de 1,3,3,3-tétrafluoropropène, idéalement de 5 à 15 % de difluorométhane, de 2 à 35 % de 1,1-difluoroéthane et de 50 à 93 % de 1,3,3,3-tétrafluoropropène.

La présente invention permet de surmonter les inconvénients de l'état de la technique. Elle fournit plus particulièrement des fluides de transfert de chaleur présentant un GWP relativement faible, et présentant de bonnes performances énergétiques, notamment dans les applications utilisant des échangeurs de chaleur à contre-courant.

Ceci est accompli grâce à des mélanges ternaires comprenant du HFO-1234ze, du HFC-32, le complément étant choisi parmi le HFC-152a. Le HFC-152a a une température d'ébullition de -24°C.

Les mélanges ternaires ci-dessus ont la particularité de présenter de bonnes performances énergétiques, notamment avec des échangeurs de chaleur de type contre-courant.

Selon certains modes de réalisation particuliers, l'invention présente également une ou de préférence plusieurs des caractéristiques avantageuses énumérées ci-dessous.

- Les fluides de transfert de chaleur de l'invention présentent un coefficient de performance supérieur aux réfrigérants de référence R404a, R407c, HFC-134a et R410a dans les applications impliquant un échangeur de chaleur à contre-courant. Dans certains cas, la capacité des fluides de transfert de chaleur est supérieure ou égale à celle des réfrigérants de référence, dans ces mêmes applications. Corrélativement, l'invention permet de diminuer le GWP de systèmes existants comprenant l'un des réfrigérants de référence ci-dessus, et ce sans dégrader les performances de ces systèmes, et au contraire en les améliorant dans une large mesure, et ce en remplaçant les réfrigérants de référence par les fluides de transfert de chaleur de l'invention.
- Les fluides de transfert de chaleur de l'invention présentent un coefficient de performance supérieur à celui du mélange HFO-1243zf / HFC-134a / HFC-32 tel qu'il est mis en œuvre dans le document US 2009/0158771.
- Les fluides de transfert de chaleur de l'invention sont moins inflammables et / ou plus efficaces que ceux utilisés dans le document WO 2009/150763.

Selon l'invention, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

## DESCRIPTION DE MODES DE REALISATION DE L'INVENTION

L'invention est maintenant décrite plus en détail et de façon non limitative dans la description qui suit.

Par « *composé de transfert de chaleur* », respectivement « *fluide de transfert de chaleur* » (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « *composition de transfert de chaleur* » on entend une composition comprenant un fluide de transfert de chaleur et éventuellement un ou plusieurs additifs qui ne sont pas des composés de transfert de chaleur pour l'application envisagée.

Le procédé de transfert de chaleur selon l'invention repose sur l'utilisation d'une installation comprenant un circuit de compression de vapeur qui contient un fluide de transfert de chaleur. Le procédé de transfert de chaleur peut être un procédé de chauffage ou de refroidissement d'un fluide ou d'un corps.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre le fluide de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, *via* un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, *via* un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en œuvre le transfert de chaleur est appelée dans ce cas « *pompe à chaleur* ».

Il est possible d'utiliser tout type d'échangeur de chaleur pour la mise en œuvre des fluides de transfert de chaleur selon l'invention, et notamment des échangeurs de chaleur à co-courant.

Toutefois, selon un mode de réalisation préféré, l'invention prévoit que les procédés de refroidissement et de chauffage, et les installations correspondantes, comprennent un échangeur de chaleur à contre-courant, soit au condenseur, soit à l'évaporateur. En effet, les fluides de transfert de chaleur selon l'invention sont particulièrement efficaces avec des échangeurs de chaleur à contre-courant. De préférence, à la fois l'évaporateur et le condenseur comprennent un échangeur de chaleur à contre-courant.

Selon l'invention, par « *échangeur de chaleur à contre-courant* », on entend un échangeur de chaleur dans lequel de la chaleur est échangée entre un premier fluide et un deuxième fluide, le premier fluide à l'entrée de l'échangeur échangeant de la chaleur avec le deuxième fluide à la sortie de l'échangeur, et le premier fluide à la sortie de l'échangeur échangeant de la chaleur avec le deuxième fluide à l'entrée de l'échangeur.

Par exemple, les échangeurs de chaleur à contre-courant comprennent les dispositifs dans lesquels le flux du premier fluide et le flux du deuxième fluide sont dans des directions opposées, ou quasiment opposées. Les échangeurs fonctionnant en mode courant croisé à tendance contre-courant sont également compris parmi les échangeurs de chaleur à contre-courant au sens de la présente demande.

La signification des différentes abréviations utilisées pour désigner les différents composés chimiques mentionnés dans la demande est la suivante :

- HFC-134a : 1,1,1,2-tétrafluoroéthane ;
- HFC-143a : 1,1,1 -trifluoroéthane ;
- HFC-125 : pentafluoroéthane ;
- HFC-32 : difluorométhane ;
- HFC-152a : 1,1-difluoroéthane ;
- HFC-41 : fluorométhane ;
- HFO-1234ze : 1,3,3,3-tétrafluoropropène ;
- HFO-1234yf : 2,3,3,3-tétrafluoropropène ;
- HFO-1243zf : 3,3,3-trifluoropropène.

Les fluides de transfert de chaleur utilisés dans l'invention sont les mélanges ternaires suivants : HFC-32, HFC-152a et HFO-1234ze.

Par « *mélange ternaire* » on entend une composition consistant essentiellement en les trois composés cités, c'est-à-dire dans laquelle les trois composés cités représentent au moins 99 % (de préférence au moins 99,5 % voire au moins 99,9 %) de la composition.

Sauf mention contraire, dans l'ensemble de la demande les proportions de composés indiquées sont données en pourcentages massiques.

Le HFO-1234ze peut être sous forme cis ou trans ou être un mélange de ces deux formes.

Pour une utilisation dans les procédés de réfrigération à basse température, c'est-à-dire ceux dans lesquels la température du fluide ou du corps refroidi est de -40°C à -10°C, et de préférence de -35°C à -25°C, de manière plus particulièrement préférée de -30°C à -20°C (idéalement d'environ -25°C), on a trouvé que les compositions les plus performantes en remplacement du R404a ou du R407c sont les suivantes :

- de 25 à 50 % de HFC-32, de 2 à 35 % de HFC-152a et de 15 à 73 % de HFO-1234ze, et de préférence de 35 à 50 % de HFC-32, de 2 à 10 % de HFC-152a et de 40 à 63 % de HFO-1234ze ;

Pour une utilisation dans les procédés de réfrigération à basse température, c'est-à-dire ceux dans lesquels la température du fluide ou du corps refroidi est de -40°C à -10°C, et de préférence de -35°C à -25°C, de manière plus particulièrement préférée de -30°C à -20°C (idéalement d'environ -25°C), on a trouvé que les compositions les plus performantes en remplacement du R410a sont les suivantes :

- pour la composition 1) : de 65 à 96 % de HFC-32, de 2 à 20 % de HFC-152a et de 2 à 25 % de HFO-1234ze, et de préférence de 65 à 93 % de HFC-32, de 2 à 10 % de HFC-152a et de 5 à 25 % de HFO-1234ze ;

Pour une utilisation dans :

- les procédés de refroidissement à température modérée, c'est-à-dire ceux dans lesquels la température du fluide ou du corps refroidi est de -15°C à 15°C, de préférence de -10°C à 10°C, de manière plus particulièrement préférée de -5°C à 5°C (idéalement d'environ 0°C), ainsi que
- les procédés de chauffage à température modérée, c'est-à-dire ceux dans lesquels la température du fluide ou du corps chauffé est de 30°C à 80°C, et de préférence de 35°C à 55°C, de manière plus particulièrement préférée de 40°C à 50°C (idéalement d'environ 45°C),

on a trouvé que les compositions les plus performantes en remplacement du HFC-134a sont les suivantes :

- de 2 à 20 % de HFC-32, de 2 à 85 % de HFC-152a et de 10 à 96 % de HFO-1234ze, et de préférence de 5 à 15 % de HFC-32, de 2 à 35 % de HFC-152a et de 50 à 93 % de HFO-1234ze ;

Pour une utilisation dans :

- les procédés de refroidissement à température modérée, c'est-à-dire ceux dans lesquels la température du fluide ou du corps refroidi est de -15°C à 15°C, de préférence de -10°C à 10°C, de manière plus particulièrement préférée de -5°C à 5°C (idéalement d'environ 0°C), ainsi que
- les procédés de chauffage à température modérée, c'est-à-dire ceux dans lesquels la température du fluide ou du corps chauffé est de 30°C à 80°C, et de préférence de 35°C à 55°C, de manière plus particulièrement préférée de 40°C à 50°C (idéalement d'environ 45°C),

on a trouvé que les compositions les plus performantes en remplacement du R404a ou du R407c sont les suivantes :

- de 20 à 50 % de HFC-32, de 2 à 65 % de HFC-152a et de 5 à 78 % de HFO-1234ze, idéalement de 25 à 50 % de HFC-32, de 2 à 15 % de HFC-152a et de 35 à 73 % de HFO-1234ze ;

Pour une utilisation dans :

- les procédés de refroidissement à température modérée, c'est-à-dire ceux dans lesquels la température du fluide ou du corps refroidi est de -15°C à 15°C, de préférence de -10°C à 10°C, de manière plus particulièrement préférée de -5°C à 5°C (idéalement d'environ 0°C), ainsi que
- les procédés de chauffage à température modérée, c'est-à-dire ceux dans lesquels la température du fluide ou du corps chauffé est de 30°C à 80°C, et de préférence de 35°C à 55°C, de manière plus particulièrement préférée de 40°C à 50°C (idéalement d'environ 45°C),

on a trouvé que les compositions les plus performantes en remplacement du R410a sont les suivantes :

- de 65 à 93 % de HFC-32, de 2 à 30 % de HFC-152a et de 5 à 33 % de HFO-1234ze, idéalement de 65 à 93 % de HFC-32, de 2 à 10 % de HFC-152a et de 5 à 33 % de HFO-1234ze ;

Dans les procédés de « *réfrigération à basse température* » mentionnés ci-dessus, la température d'entrée du fluide de transfert de chaleur à l'évaporateur est de préférence de -45°C à -15°C, notamment de -40°C à -20°C, de manière plus particulièrement préférée de -35°C à -25°C et par exemple d'environ -30°C ; et la température du début de la condensation du fluide de transfert de chaleur au condenseur est de préférence de 25°C à 80°C, notamment de 30°C à 60°C, de manière plus particulièrement préférée de 35°C à 55°C et par exemple d'environ 40°C.

Dans les procédés de « *refroidissement à température modérée* » mentionnés ci-dessus, la température d'entrée du fluide de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation du fluide de transfert de chaleur au condenseur est de préférence de 25°C à 80°C, notamment de 30°C à 60°C, de manière plus particulièrement préférée de 35°C à 55°C et par exemple d'environ 50°C. Ces procédés peuvent être des procédés de réfrigération ou de climatisation.

Dans les procédés de « *chauffage à température modérée* » mentionnés ci-dessus, la température d'entrée du fluide de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation du fluide de transfert de chaleur au condenseur est de préférence de 25°C à 80°C, notamment de 30°C à 60°C, de manière plus particulièrement préférée de 35°C à 55°C et par exemple d'environ 50°C.

Pour ces fluides de transfert de chaleur, à température constante, la pression de saturation liquide et la pression de saturation vapeur sont quasiment identiques (la différence maximale de pression étant de 10 %). Ces fluides de transfert de chaleur présentent un avantage de facilité de mise en œuvre. En l'absence de glissement de température significatif, il n'y a pas de changement significatif de la composition circulante, et pas non plus de changement significatif de la composition en cas de fuite. Ces fluides de transfert de chaleur sont particulièrement appropriés pour le remplacement du R410a par exemple.

Les fluides de transfert de chaleur qui ne sont pas des quasiazéotropes, pour leur part, sont cependant très efficaces lorsqu'ils sont correctement couplés à un échangeur de chaleur à contre-courant (avec une différence de température avec le deuxième fluide approximativement constante dans l'échangeur).

Chaque fluide de transfert de chaleur ci-dessus peut être mélangé avec un ou plusieurs additifs pour fournir la composition de transfert de chaleur circulant effectivement dans le circuit de compression de vapeur. Les additifs peuvent notamment être choisis parmi les lubrifiants, les stabilisants, les tensioactifs, les agents traceurs, les agents fluorescents, les agents odorants, les agents de solubilisation et leurs mélanges.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de lubrifiants on peut notamment utiliser des huiles d'origine minérale, des huiles silicones, des paraffines, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures, les hydrofluorocarbures deutérés, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromaiques hétérocycliques, l'ascaridol, l'o-méthoxy(méthyl)-phénol et les combinaisons de ceux-ci.

Les compositions selon l'invention peuvent également être utiles en tant qu'agent d'expansion, aérosol ou solvant.

EXEMPLES

Les exemples suivants illustrent l'invention sans la limiter.

Exemple 1 - méthode de calcul des propriétés des fluides de transfert de chaleur dans les différentes configurations envisagées

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données nécessaires pour chaque corps pur sont la température d'ébullition, la température critique et la pression critique, la courbe de pression en fonction de la température à partir du point d'ébullition jusqu'au point critique, les densités de liquide saturé et de vapeur saturée en fonction de la température.

Les données sur les HFC sont publiées dans l'ASHRAE Handbook 2005 chapitre 20 et sont aussi disponible sous Refrop (Logiciel développé par NIST pour le calcul des propriétés des fluides frigorigènes).

Les données de la courbe température-pression des HFO sont mesurées par la méthode statique. La température critique et la pression critique sont mesurées par un calorimètre C80 commercialisé par Setaram. Les densités, à saturation en fonction de la température, sont mesurées par la technologie du densimètre à tube vibrant développée par les laboratoires de l'école des Mines de Paris.

L'équation RK-Soave utilise des coefficients d'interaction binaire pour représenter le comportement des produits en mélanges. Les coefficients sont calculés en fonction des données expérimentales d'équilibre liquide vapeur.

La technique utilisée pour les mesures d'équilibre liquide vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 seriesII) en phase gazeuse utilisant un catharomètre (TCD).

Les mesures d'équilibre liquide vapeur sur le binaire HFC-32 / HFO-1234ze sont réalisées pour l'isotherme suivante : 15°C.

Les mesures d'équilibre liquide vapeur sur le binaire HFC-134a / HFO-1234ze sont réalisées pour l'isotherme suivante : 20°C.

Les mesures d'équilibre liquide vapeur sur le binaire HFC-134a / HFO-1234ze sont réalisées pour l'isotherme suivante : 15°C.

Les mesures d'équilibre liquide vapeur sur le binaire HFC-32 / HFO-1234yf sont réalisées pour les isothermes suivantes : 70°C, 30°C, -10°C.

Les mesures d'équilibre liquide vapeur sur le binaire HFO-1234ze / HFO-1234yf sont réalisées pour l'isotherme suivante : 18°C.

Les données d'équilibre liquide vapeur pour le binaire HFC-152a / HFC-32 sont disponible sous Refprop. Deux isothermes (-20°C et 20°C) et deux isobares (1 bar et 25 bar) sont utilisées pour le calcul des coefficients d'interaction pour ce binaire.

Les données d'équilibre liquide vapeur pour le binaire HFC-134a / HFC-32 sont disponible sous Refprop. Deux isothermes (-20°C et 20°C) et deux isobares (1 bar et 30 bar) sont utilisées pour le calcul des coefficients d'interaction pour ce binaire.

On considère un système à compression équipé d'un évaporateur et condenseur à contre-courant, d'un compresseur à vis et d'un détendeur.

Le système fonctionne avec 15°C de surchauffe et 5°C de sous-refroidissement. L'écart de température minimum entre le fluide secondaire et le fluide frigorigène est considéré de l'ordre de 5°C.

Le rendement isentropique des compresseurs est fonction du taux de compression. Ce rendement est calculé suivant l'équation suivante:

$$(1) \qquad \eta_{isen} = a - b(\tau - c)^2 - \frac{d}{\tau - e}$$

Pour un compresseur à vis, les constantes a, b, c, d et e de l'équation (1) du rendement isentropique sont calculées suivant les données types publiées dans le « *Handbook of air conditioning and refrigeration* », page 11.52.

Le coefficient de performance (COP) est défini, comme étant la puissance utile fournie par le système sur la puissance apportée ou consommée par le système.

Le coefficient de performance de Lorenz (COPLorenz) est un coefficient de performance de référence. Il est fonction de températures et est utilisé pour comparer les COP des différents fluides.

Le coefficient de performance de Lorenz est défini comme suit (les températures T sont en K) :

$$(2) \qquad T_{moyenne}^{condenseur} = T_{entrée}^{condenseur} - T_{sortie}^{condenseur}$$

$$(3) \qquad T_{moyenne}^{évaporateur} = T_{sortie}^{évaporateur} - T_{entrée}^{évaporateur}$$

Le COP de Lorenz dans le cas de l'air conditionné et de la réfrigération est :

$$(4) \qquad COP lorenz = \frac{T^{\text{évaporateur}}_{\text{moyenne}}}{T^{\text{condenseur}}_{\text{moyenne}} - T^{\text{évaporateur}}_{\text{moyenne}}}$$

Le COP de Lorenz dans le cas du chauffage est :

$$(5) \qquad COP lorenz = \frac{T^{\text{condenseur}}_{\text{moyenne}}}{T^{\text{condenseur}}_{\text{moyenne}} - T^{\text{évaporateur}}_{\text{moyenne}}}$$

Pour chaque composition, le coefficient de performance du cycle de Lorenz est calculé en fonction des températures correspondantes.

En mode de réfrigération à basse température, le système à compression fonctionne entre une température d'entrée du fluide frigorigène à l'évaporateur de -30°C et une température d'entrée du fluide frigorigène au condenseur de 40°C. Le système fourni du froid à -25°C.

En mode de chauffage à température modérée, le système à compression fonctionne entre une température d'entrée du fluide frigorigène à l'évaporateur de -5°C et une température du début de la condensation du fluide frigorigène au condenseur de 50°C. Le système fourni de la chaleur à 45°C.

En mode de refroidissement à température modérée, le système à compression fonctionne entre une température d'entrée du fluide frigorigène à l'évaporateur de -5°C et une température du début de la condensation du fluide frigorigène au condenseur de 50°C. Le système fourni du froid à 0°C.

Dans les tableaux qui suivent, « *Temp sortie évap* » désigne la température du fluide à la sortie de l'évaporateur, « *Temp sortie comp* » désigne la température du fluide à la sortie du compresseur, « *T sortie cond* » désigne la température du fluide à la sortie du condenseur, « *evap P* » désigne la pression du fluide dans l'évaporateur, « *cond P* » désigne la pression du fluide dans le condenseur, « *Taux (p/p)* » désigne le taux de compression, « *Glide* » désigne le glissement de température, « *rendement comp* » désigne le rendement du compresseur, « *% CAP* » désigne la capacité volumétrique du fluide par rapport au fluide de référence indiqué en première ligne, « *%COP/COPLorenz* » désigne le rapport du COP du système par rapport au COP du cycle de Lorenz correspondant, « *Psat liquide* » désigne la pression de saturation liquide, « *Psat vapeur* » désigne la pression de saturation vapeur, et « *% diff de pression* » désigne la différence entre ces deux pressions, exprimée en pourcentage.

Exemple 2 - Résultats pour une réfrigération à basse température, comparaison avec le R404a et le R407c

Le mélange HFC-32/ HFC-134a/ HFO-1234ze et le mélange HFO-1234f/ HFC-32/ HFO-1234ze ne font pas partie de l'invention

## Mélange HFC-32 / HFC-134a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R404A | | | -30 | 101 | 40 | 2,1 | 18,1 | 8,8 | 0,46 | 53,8 | 100 | 32 |
| R407C | | | -26 | 131 | 35 | 1,7 | 15,3 | 9,0 | 4,48 | 51,9 | 108 | 35 |
| HFC-32 | HFC-134a | HFO-1234ze | | | | | | | | | | |
| 25 | 40 | 35 | -24 | 133 | 33 | 1,4 | 12,8 | 9,1 | 5,64 | 51,1 | 94 | 36 |
| | | | | | | | | | | | | |
| 35 | 60 | 5 | -25 | 144 | 34 | 1,7 | 14,9 | 8,9 | 4,97 | 52,6 | 111 | 37 |
| 35 | 50 | 15 | -25 | 140 | 34 | 1,7 | 14,7 | 8,8 | 5,38 | 53,6 | 111 | 37 |
| 35 | 40 | 25 | -24 | 136 | 33 | 1,7 | 14,4 | 8,7 | 5,90 | 54,5 | 110 | 38 |
| 35 | 30 | 35 | -24 | 132 | 33 | 1,6 | 14,2 | 8,6 | 6,44 | 55,5 | 110 | 39 |
| 35 | 20 | 45 | -23 | 128 | 32 | 1,6 | 13,9 | 8,5 | 6,99 | 56,3 | 110 | 40 |
| 35 | 10 | 55 | -22 | 126 | 32 | 1,6 | 13,6 | 8,4 | 7,53 | 57,0 | 109 | 40 |
| | | | | | | | | | | | | |
| 50 | 45 | 5 | -25 | 153 | 35 | 2,0 | 17,1 | 8,6 | 4,83 | 55,0 | 130 | 38 |
| 50 | 35 | 15 | -25 | 148 | 34 | 2,0 | 16,9 | 8,5 | 5,30 | 56,0 | 130 | 39 |
| 50 | 25 | 25 | -24 | 143 | 34 | 2,0 | 16,6 | 8,4 | 5,89 | 57,1 | 130 | 40 |
| 50 | 15 | 35 | -23 | 139 | 33 | 2,0 | 16,3 | 8,2 | 6,52 | 58,1 | 131 | 41 |
| 50 | 5 | 45 | -23 | 136 | 32 | 2,0 | 16,0 | 8,1 | 7,14 | 59,1 | 131 | 41 |

## Mélange HFO-1234yf / HFC-32 / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R404A | | | -30 | 101 | 40 | 2,1 | 18,1 | 8,8 | 0,46 | 53,8 | 100 | 32 |
| R407C | | | -26 | 131 | 35 | 1,7 | 15,3 | 9,0 | 4,48 | 51,9 | 108 | 35 |
| HFO-1234yf | HFC-32 | HFO-1234ze | | | | | | | | | | |
| 70 | 25 | 5 | -25 | 103 | 32 | 1,8 | 14,7 | 8,1 | 5,27 | 58,9 | 107 | 40 |
| 60 | 25 | 15 | -24 | 105 | 32 | 1,7 | 14,3 | 8,2 | 5,65 | 58,5 | 105 | 39 |
| 50 | 25 | 25 | -24 | 106 | 32 | 1,7 | 13,8 | 8,2 | 6,14 | 58,4 | 103 | 40 |
| 40 | 25 | 35 | -23 | 107 | 31 | 1,6 | 13,3 | 8,2 | 6,62 | 58,3 | 102 | 40 |
| 30 | 25 | 45 | -23 | 108 | 31 | 1,6 | 12,8 | 8,3 | 7,04 | 58,0 | 99 | 40 |
| | | | | | | | | | | | | |
| 60 | 35 | 5 | -25 | 113 | 34 | 2,1 | 16,6 | 8,1 | 5,06 | 59,5 | 122 | 40 |
| 50 | 35 | 15 | -24 | 114 | 33 | 2,0 | 16,1 | 8,1 | 5,63 | 59,4 | 120 | 40 |
| 40 | 35 | 25 | -24 | 114 | 32 | 1,9 | 15,4 | 8,0 | 6,29 | 59,8 | 119 | 41 |
| 30 | 35 | 35 | -23 | 114 | 31 | 1,8 | 14,8 | 8,0 | 6,93 | 60,0 | 117 | 41 |
| 20 | 35 | 45 | -23 | 116 | 31 | 1,8 | 14,2 | 8,0 | 7,46 | 59,8 | 115 | 42 |
| 10 | 35 | 55 | -22 | 118 | 31 | 1,7 | 13,7 | 8,1 | 7,85 | 59,1 | 112 | 42 |
| | | | | | | | | | | | | |
| 45 | 50 | 5 | -26 | 132 | 36 | 2,3 | 19,3 | 8,3 | 3,72 | 57,9 | 138 | 38 |
| 35 | 50 | 15 | -25 | 132 | 35 | 2,3 | 18,5 | 8,2 | 4,66 | 58,5 | 137 | 39 |
| 25 | 50 | 25 | -24 | 131 | 34 | 2,2 | 17,6 | 8,1 | 5,63 | 59,3 | 136 | 40 |
| 15 | 50 | 35 | -24 | 131 | 33 | 2,1 | 16,8 | 8,0 | 6,49 | 59,8 | 135 | 41 |
| 5 | 50 | 45 | -23 | 133 | 32 | 2,0 | 16,2 | 8,0 | 7,17 | 59,8 | 132 | 42 |

## Mélange HFC-32 / HFC-152a / HFO-1234ze:

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R404A | | | -30 | 101 | 40 | 2,1 | 18,1 | 8,8 | 0,46 | 53,8 | 100 | 32 |
| R407C | | | -26 | 131 | 35 | 1,7 | 15,3 | 9,0 | 4,48 | 51,9 | 108 | 35 |
| HFC-32 | HFC-152a | HFO-1234ze | | | | | | | | | | |
| 35 | 30 | 35 | -24 | 152 | 31 | 1,5 | 13,2 | 9,1 | 6,21 | 51,3 | 105 | 37 |
| 35 | 20 | 45 | -23 | 140 | 31 | 1,5 | 13,1 | 8,8 | 6,96 | 54,0 | 106 | 39 |
| 35 | 10 | 55 | -22 | 130 | 31 | 1,5 | 13,1 | 8,5 | 7,65 | 56,3 | 108 | 40 |
| | | | | | | | | | | | | |
| 50 | 35 | 15 | -24 | 176 | 33 | 1,7 | 15,7 | 9,2 | 5,96 | 50,4 | 122 | 36 |
| 50 | 25 | 25 | -24 | 162 | 33 | 1,8 | 15,7 | 8,8 | 6,39 | 53,4 | 125 | 38 |
| 50 | 15 | 35 | -23 | 148 | 32 | 1,8 | 15,6 | 8,4 | 7,14 | 56,6 | 128 | 40 |
| 50 | 5 | 45 | -22 | 137 | 32 | 1,9 | 15,7 | 8,1 | 7,64 | 59,0 | 130 | 42 |

Exemple 3 - Résultats pour une réfrigération à basse température, comparaison avec le R410a

Le mélange HFC-32/ HFC-134a/ HFO-1234ze et le mélange HFO-1234yf/ HFC-32/ HFO-1234ze ne font pas partie de l'invention.

## Mélange HFC-32 / HFC-134a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R410A | | | -30 | 153 | 40 | 2,7 | 24,2 | 8,9 | 0,06 | 52,5 | 100 | 33 |
| HFC-32 | HFC-134a | HFO-1234ze | | | | | | | | | | |
| 65 | 30 | 5 | -26 | 167 | 36 | 2,2 | 19,4 | 8,6 | 3,91 | 55,2 | 96 | 38 |
| 65 | 20 | 15 | -26 | 162 | 36 | 2,3 | 19,1 | 8,5 | 4,40 | 56,1 | 96 | 39 |
| 65 | 10 | 25 | -25 | 157 | 35 | 2,3 | 18,9 | 8,4 | 5,07 | 57,3 | 97 | 39 |
| | | | | | | | | | | | | |
| 80 | 15 | 5 | -28 | 185 | 38 | 2,5 | 21,7 | 8,7 | 2,49 | 54,1 | 105 | 37 |
| 80 | 5 | 15 | -27 | 180 | 37 | 2,5 | 21,5 | 8,6 | 3,01 | 54,9 | 105 | 37 |
| | | | | | | | | | | | | |
| 90 | 5 | 5 | -29 | 199 | 39 | 2,6 | 23,3 | 8,9 | 1,34 | 53,0 | 110 | 35 |

## Mélange HFO-1234yf / HFC-32 / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R410A | | | -30 | 153 | 40 | 2,7 | 24,2 | 8,9 | 0,06 | 52,5 | 100 | 33 |
| HFO-1234yf | HFC-32 | HFO-1234ze | | | | | | | | | | |
| 30 | 65 | 5 | -28 | 155 | 38 | 2,5 | 21,4 | 8,5 | 2,22 | 55,8 | 99 | 37 |
| 20 | 65 | 15 | -26 | 154 | 37 | 2,4 | 20,5 | 8,4 | 3,55 | 56,7 | 99 | 38 |
| 10 | 65 | 25 | -25 | 153 | 35 | 2,3 | 19,4 | 8,3 | 4,76 | 57,8 | 98 | 39 |
| | | | | | | | | | | | | |
| 15 | 80 | 5 | -29 | 180 | 39 | 2,6 | 23,0 | 8,8 | 1,19 | 53,9 | 106 | 36 |
| 5 | 80 | 15 | -27 | 179 | 38 | 2,5 | 21,9 | 8,7 | 2,69 | 54,9 | 106 | 37 |
| | | | | | | | | | | | | |
| 5 | 90 | 5 | -29 | 198 | 39 | 2,7 | 23,8 | 8,9 | 0,82 | 52,8 | 110 | 35 |

## Mélange HFC-32 / HFC-152a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R410A | | | -30 | 153 | 40 | 2,7 | 24,2 | 8,9 | 0,06 | 52,5 | 100 | 33 |
| HFC-32 | HFC-152a | HFO-1234ze | | | | | | | | | | |
| 65 | 20 | 15 | -24 | 180 | 35 | 2,1 | 18,4 | 8,9 | 5,51 | 52,6 | 93 | 36 |
| 65 | 10 | 25 | -24 | 164 | 34 | 2,2 | 18,4 | 8,5 | 5,92 | 56,0 | 95 | 39 |
| | | | | | | | | | | | | |
| 80 | 15 | 5 | -26 | 201 | 37 | 2,3 | 21,2 | 9,1 | 4,14 | 51,2 | 102 | 34 |
| 80 | 5 | 15 | -26 | 185 | 37 | 2,4 | 21,3 | 8,8 | 3,70 | 54,1 | 104 | 36 |
| | | | | | | | | | | | | |
| 90 | 5 | 5 | -28 | 205 | 39 | 2,6 | 23,1 | 9,0 | 2,20 | 52,0 | 109 | 35 |

Exemple 4 - Résultats pour un refroidissement à température modérée, comparaison avec le HFC-134a

Le mélange HFC-32/ HFC-134a/ HFO-1234ze et le mélange HFO-1234yf/ HFC-32/ HFO-1234ze ne font pas partie de l'invention. Mélange HFC-32 / HFC-134a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R134a | | | -5 | 81 | 50 | 2,4 | 13,2 | 5,4 | 0,00 | 75,9 | 100 | 54 |
| HFC-32 | HFC-134a | HFO-1234ze | | | | | | | | | | |
| 5 | 25 | 70 | -3 | 77 | 46 | 2,3 | 12,0 | 5,1 | 2,38 | 77,3 | 99 | 55 |
| 5 | 35 | 60 | -3 | 78 | 47 | 2,4 | 12,3 | 5,1 | 2,22 | 77,2 | 101 | 55 |
| 5 | 45 | 50 | -3 | 79 | 47 | 2,5 | 12,7 | 5,1 | 2,05 | 77,2 | 103 | 55 |
| 5 | 55 | 40 | -3 | 80 | 47 | 2,5 | 13,0 | 5,1 | 1,88 | 77,2 | 105 | 55 |
| 5 | 65 | 30 | -3 | 80 | 48 | 2,6 | 13,3 | 5,1 | 1,70 | 77,2 | 107 | 55 |
| 5 | 75 | 20 | -3 | 81 | 48 | 2,6 | 13,6 | 5,1 | 1,53 | 77,2 | 109 | 55 |
| 5 | 85 | 10 | -4 | 82 | 48 | 2,7 | 13,8 | 5,1 | 1,37 | 77,2 | 112 | 55 |
| | | | | | | | | | | | | |
| 15 | 5 | 80 | 1 | 79 | 42 | 3,0 | 13,3 | 4,5 | 6,02 | 79,6 | 128 | 58 |
| 15 | 15 | 70 | 1 | 80 | 43 | 3,0 | 13,7 | 4,5 | 5,52 | 79,5 | 129 | 58 |
| 15 | 25 | 60 | 0 | 81 | 44 | 3,1 | 14,0 | 4,5 | 5,10 | 79,4 | 130 | 58 |
| 15 | 35 | 50 | 0 | 82 | 44 | 3,1 | 14,3 | 4,6 | 4,72 | 79,3 | 132 | 57 |
| 15 | 45 | 40 | -1 | 83 | 44 | 3,2 | 14,6 | 4,6 | 4,36 | 79,2 | 133 | 57 |
| 15 | 55 | 30 | -1 | 84 | 45 | 3,2 | 15,0 | 4,6 | 4,03 | 79,1 | 135 | 57 |
| 15 | 65 | 20 | -1 | 85 | 45 | 3,3 | 15,2 | 4,7 | 3,71 | 79,0 | 136 | 57 |
| 15 | 75 | 10 | -2 | 86 | 46 | 3,3 | 15,5 | 4,7 | 3,44 | 78,9 | 138 | 57 |

## Mélange HFO-1234yf / HFC-32 / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R134a | | | -5 | 81 | 50 | 2,4 | 13,2 | 5,4 | 0,00 | 75,9 | 100 | 54 |
| HFO-1234yf | HFC-32 | HFO-1234ze | | | | | | | | | | |
| 25 | 5 | 70 | -2 | 73 | 46 | 2,4 | 11,9 | 4,9 | 2,89 | 78,1 | 98 | 55 |
| 35 | 5 | 60 | -2 | 72 | 46 | 2,5 | 12,3 | 4,8 | 2,85 | 78,3 | 101 | 55 |
| 45 | 5 | 50 | -2 | 72 | 46 | 2,6 | 12,7 | 4,8 | 2,75 | 78,5 | 103 | 55 |
| 55 | 5 | 40 | -2 | 71 | 46 | 2,7 | 13,0 | 4,7 | 2,60 | 78,7 | 106 | 55 |
| | | | | | | | | | | | | |
| 5 | 15 | 80 | 1,2 | 78 | 42 | 3,0 | 13,3 | 4,4 | 6,23 | 79,8 | 129 | 58 |
| 15 | 15 | 70 | 1,1 | 78 | 42 | 3,2 | 13,6 | 4,3 | 6,13 | 80,1 | 131 | 58 |
| 25 | 15 | 60 | 1,0 | 77 | 42 | 3,3 | 14,0 | 4,3 | 6,03 | 80,2 | 134 | 58 |
| 35 | 15 | 50 | 0,9 | 76 | 42 | 3,4 | 14,5 | 4,2 | 5,90 | 80,3 | 138 | 58 |
| 45 | 15 | 40 | 0,7 | 76 | 43 | 3,6 | 14,9 | 4,2 | 5,71 | 80,4 | 142 | 58 |
| 55 | 15 | 30 | 0,5 | 76 | 43 | 3,7 | 15,4 | 4,2 | 5,47 | 80,4 | 145 | 58 |
| 65 | 15 | 20 | 0,2 | 75 | 43 | 3,8 | 15,9 | 4,2 | 5,19 | 80,5 | 148 | 57 |
| 75 | 15 | 10 | -0,1 | 75 | 43 | 3,9 | 16,2 | 4,2 | 4,93 | 80,5 | 149 | 57 |

## Mélange HFC-32 / HFC-152a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| HFC-134a | | | -5 | 81 | 50 | 2,4 | 13,2 | 5,4 | 0,00 | 75,9 | 100 | 54 |
| HFC-32 | HFC-152a | HFO-1234ze | | | | | | | | | | |
| 5 | 5 | 90 | -3 | 76 | 45 | 2,2 | 11,2 | 5,1 | 2,32 | 77,1 | 93 | 56 |
| 5 | 15 | 80 | -3 | 79 | 46 | 2,2 | 11,4 | 5,2 | 1,92 | 76,9 | 95 | 56 |
| 5 | 25 | 70 | -3 | 81 | 47 | 2,3 | 11,7 | 5,2 | 1,75 | 76,9 | 98 | 56 |
| 5 | 35 | 60 | -3 | 84 | 47 | 2,3 | 11,9 | 5,2 | 1,65 | 76,9 | 100 | 57 |
| 5 | 45 | 50 | -3 | 86 | 47 | 2,3 | 12,0 | 5,2 | 1,55 | 77,0 | 103 | 57 |
| 5 | 55 | 40 | -4 | 89 | 47 | 2,4 | 12,2 | 5,2 | 1,43 | 77,0 | 105 | 57 |
| 5 | 65 | 30 | -4 | 91 | 47 | 2,4 | 12,3 | 5,2 | 1,29 | 77,0 | 106 | 58 |
| 5 | 75 | 20 | -4 | 93 | 47 | 2,4 | 12,3 | 5,2 | 1,14 | 76,9 | 108 | 58 |
| 5 | 85 | 10 | -4 | 95 | 47 | 2,4 | 12,3 | 5,2 | 0,97 | 76,8 | 108 | 58 |
| | | | | | | | | | | | | |
| 15 | 5 | 80 | 1 | 80 | 42 | 2,9 | 13,1 | 4,5 | 5,61 | 79,4 | 126 | 59 |
| 15 | 15 | 70 | 0 | 83 | 43 | 2,9 | 13,2 | 4,6 | 4,89 | 79,1 | 126 | 59 |
| 15 | 25 | 60 | 0 | 85 | 43 | 2,9 | 13,3 | 4,7 | 4,54 | 79,0 | 128 | 59 |
| 15 | 35 | 50 | -1 | 88 | 43 | 2,9 | 13,5 | 4,7 | 4,28 | 78,9 | 130 | 59 |
| 15 | 45 | 40 | -1 | 90 | 43 | 2,9 | 13,7 | 4,7 | 4,00 | 78,7 | 131 | 59 |
| 15 | 55 | 30 | -1 | 93 | 43 | 2,9 | 13,7 | 4,8 | 3,70 | 78,6 | 132 | 59 |
| 15 | 65 | 20 | -2 | 95 | 44 | 2,9 | 13,8 | 4,8 | 3,37 | 78,4 | 132 | 59 |
| 15 | 75 | 10 | -2 | 98 | 44 | 2,8 | 13,7 | 4,9 | 3,04 | 78,1 | 132 | 59 |

Les première, deuxième et dixième compositions du tableau ne font pas partie de l'invention

Exemple 5 - Résultats pour un chauffage à température modérée, comparaison avec le HFC-134a

Le mélange HFC-32/ HFC-134a/ HFO-1234ze et le mélange HFO-1234yf/ HFC-32/ HFO-1234ze ne font pas partie de l'invention

## Mélange HFC-32 / HFC-134a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAPc | %COPc / COPLorenz |
|---|---|---|---|---|---|---|---|---|---|---|---|---|
| R134a | | | -5 | 81 | 50 | 2,4 | 13,2 | 5,4 | 0,00 | 75,9 | 100 | 63 |
| HFC-32 | HFC-134a | HFO-1234ze | | | | | | | | | | |
| 5 | 35 | 60 | -3 | 78 | 47 | 2,4 | 12,3 | 5,1 | 2,22 | 77,2 | 99 | 64 |
| 5 | 45 | 50 | -3 | 79 | 47 | 2,5 | 12,7 | 5,1 | 2,05 | 77,2 | 102 | 64 |
| 5 | 55 | 40 | -3 | 80 | 47 | 2,5 | 13,0 | 5,1 | 1,88 | 77,2 | 104 | 64 |
| 5 | 65 | 30 | -3 | 80 | 48 | 2,6 | 13,3 | 5,1 | 1,70 | 77,2 | 106 | 64 |
| 5 | 75 | 20 | -3 | 81 | 48 | 2,6 | 13,6 | 5,1 | 1,53 | 77,2 | 108 | 64 |
| 5 | 85 | 10 | -4 | 82 | 48 | 2,7 | 13,8 | 5,1 | 1,37 | 77,2 | 110 | 64 |
| | | | | | | | | | | | | |
| 15 | 5 | 80 | 1 | 79 | 42 | 3,0 | 13,3 | 4,5 | 6,02 | 79,6 | 121 | 66 |
| 15 | 15 | 70 | 1 | 80 | 43 | 3,0 | 13,7 | 4,5 | 5,52 | 79,5 | 123 | 66 |
| 15 | 25 | 60 | 0 | 81 | 44 | 3,1 | 14,0 | 4,5 | 5,10 | 79,4 | 124 | 65 |
| 15 | 35 | 50 | 0 | 82 | 44 | 3,1 | 14,3 | 4,6 | 4,72 | 79,3 | 125 | 65 |
| 15 | 45 | 40 | -1 | 83 | 44 | 3,2 | 14,6 | 4,6 | 4,36 | 79,2 | 127 | 65 |
| 15 | 55 | 30 | -1 | 84 | 45 | 3,2 | 15,0 | 4,6 | 4,03 | 79,1 | 128 | 65 |
| 15 | 65 | 20 | -1 | 85 | 45 | 3,3 | 15,2 | 4,7 | 3,71 | 79,0 | 130 | 65 |
| 15 | 75 | 10 | -2 | 86 | 46 | 3,3 | 15,5 | 4,7 | 3,44 | 78,9 | 132 | 65 |

## Mélange HFO-1234yf / HFC-32 / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R134a | | | -5 | 81 | 50 | 2,4 | 13,2 | 5,4 | 0,00 | 75,9 | 100 | 63 |
| HFO-1234yf | HFC-32 | HFO-1234ze | | | | | | | | | | |
| 35 | 5 | 60 | -2 | 72 | 46 | 2,5 | 12,3 | 4,8 | 2,85 | 78,3 | 100 | 64 |
| 45 | 5 | 50 | -2 | 72 | 46 | 2,6 | 12,7 | 4,8 | 2,75 | 78,5 | 102 | 64 |
| 55 | 5 | 40 | -2 | 71 | 46 | 2,7 | 13,0 | 4,7 | 2,60 | 78,7 | 105 | 64 |
| 65 | 5 | 30 | -3 | 71 | 46 | 2,8 | 13,4 | 4,7 | 2,41 | 78,8 | 107 | 64 |
| | | | | | | | | | | | | |
| 5 | 15 | 80 | 1,2 | 78 | 42 | 3,0 | 13,3 | 4,4 | 6,23 | 79,8 | 122 | 66 |
| 15 | 15 | 70 | 1,1 | 78 | 42 | 3,2 | 13,6 | 4,3 | 6,13 | 80,1 | 125 | 66 |
| 25 | 15 | 60 | 1,0 | 77 | 42 | 3,3 | 14,0 | 4,3 | 6,03 | 80,2 | 129 | 66 |
| 35 | 15 | 50 | 0,9 | 76 | 42 | 3,4 | 14,5 | 4,2 | 5,90 | 80,3 | 132 | 66 |
| 45 | 15 | 40 | 0,7 | 76 | 43 | 3,6 | 14,9 | 4,2 | 5,71 | 80,4 | 136 | 66 |
| 55 | 15 | 30 | 0,5 | 76 | 43 | 3,7 | 15,4 | 4,2 | 5,47 | 80,4 | 139 | 66 |
| 65 | 15 | 20 | 0,2 | 75 | 43 | 3,8 | 15,9 | 4,2 | 5,19 | 80,5 | 142 | 66 |
| 75 | 15 | 10 | -0,1 | 75 | 43 | 3,9 | 16,2 | 4,2 | 4,93 | 80,5 | 143 | 65 |

## Mélange HFC-32 / HFC-152a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COPc / COPLorenz |
|---|---|---|---|---|---|---|---|---|---|---|---|---|
| HFC-134a | | | -5 | 81 | 50 | 2,4 | 13,2 | 5,4 | 0,00 | 75,9 | 100 | 63 |
| HFC-32 | HFC-152a | HFO-1234ze | | | | | | | | | | |
| 5 | 5 | 90 | -3 | 76 | 45 | 2,2 | 11,2 | 5,1 | 2,32 | 77,1 | 91 | 64 |
| 5 | 15 | 80 | -3 | 79 | 46 | 2,2 | 11,4 | 5,2 | 1,92 | 76,9 | 93 | 64 |
| 5 | 25 | 70 | -3 | 81 | 47 | 2,3 | 11,7 | 5,2 | 1,75 | 76,9 | 95 | 65 |
| 5 | 35 | 60 | -3 | 84 | 47 | 2,3 | 11,9 | 5,2 | 1,65 | 76,9 | 98 | 65 |
| 5 | 45 | 50 | -3 | 86 | 47 | 2,3 | 12,0 | 5,2 | 1,55 | 77,0 | 100 | 65 |
| 5 | 55 | 40 | -4 | 89 | 47 | 2,4 | 12,2 | 5,2 | 1,43 | 77,0 | 102 | 66 |
| 5 | 65 | 30 | -4 | 91 | 47 | 2,4 | 12,3 | 5,2 | 1,29 | 77,0 | 103 | 66 |
| 5 | 75 | 20 | -4 | 93 | 47 | 2,4 | 12,3 | 5,2 | 1,14 | 76,9 | 104 | 66 |
| 5 | 85 | 10 | -4 | 95 | 47 | 2,4 | 12,3 | 5,2 | 0,97 | 76,8 | 104 | 66 |
| | | | | | | | | | | | | |
| 15 | 5 | 80 | 1 | 80 | 42 | 2,9 | 13,1 | 4,5 | 5,61 | 79,4 | 120 | 66 |
| 15 | 15 | 70 | 0 | 83 | 43 | 2,9 | 13,2 | 4,6 | 4,89 | 79,1 | 119 | 66 |
| 15 | 25 | 60 | 0 | 85 | 43 | 2,9 | 13,3 | 4,7 | 4,54 | 79,0 | 121 | 67 |
| 15 | 35 | 50 | -1 | 88 | 43 | 2,9 | 13,5 | 4,7 | 4,28 | 78,9 | 123 | 67 |
| 15 | 45 | 40 | -1 | 90 | 43 | 2,9 | 13,7 | 4,7 | 4,00 | 78,7 | 124 | 67 |
| 15 | 55 | 30 | -1 | 93 | 43 | 2,9 | 13,7 | 4,8 | 3,70 | 78,6 | 125 | 67 |
| 15 | 65 | 20 | -2 | 95 | 44 | 2,9 | 13,8 | 4,8 | 3,37 | 78,4 | 125 | 67 |
| 15 | 75 | 10 | -2 | 98 | 44 | 2,8 | 13,7 | 4,9 | 3,04 | 78,1 | 125 | 67 |

Les première, deuxième et dixième compositions du tableau ne font pas partie de l'invention

Exemple 6 - Résultats pour un refroidissement à température modérée, comparaison avec le R404a et le R407c

Le mélange HFC-32/ HFC-134a/ HFO-1234ze et le mélange HFO-1234yf/ HFC-32/ HFO-1234ze ne font pas partie de l'invention.

## Mélange HFC-32 / HFC-134a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R404A | | | -5 | 77 | 50 | 5,2 | 23,0 | 4,5 | 0,37 | 79,7 | 100 | 48 |
| R407C | | | -1 | 89 | 45 | 4,5 | 19,8 | 4,4 | 4,46 | 79,9 | 114 | 56 |
| HFC-32 | HFC-134a | HFO-1234ze | | | | | | | | | | |
| 25 | 5 | 70 | 2 | 84 | 42 | 3,7 | 15,4 | 4,2 | 7,24 | 80,4 | 100 | 59 |
| 25 | 15 | 60 | 2 | 85 | 42 | 3,7 | 15,7 | 4,2 | 6,76 | 80,3 | 100 | 59 |
| 25 | 25 | 50 | 1 | 86 | 43 | 3,8 | 16,0 | 4,3 | 6,30 | 80,3 | 101 | 59 |
| 25 | 35 | 40 | 1 | 87 | 43 | 3,8 | 16,3 | 4,3 | 5,87 | 80,2 | 101 | 58 |
| 25 | 45 | 30 | 0 | 88 | 44 | 3,8 | 16,6 | 4,3 | 5,43 | 80,0 | 102 | 58 |
| 25 | 55 | 20 | 0 | 89 | 44 | 3,9 | 17,0 | 4,4 | 5,01 | 79,9 | 103 | 58 |
| 25 | 65 | 10 | 0 | 90 | 45 | 3,9 | 17,3 | 4,4 | 4,64 | 79,7 | 104 | 58 |
| | | | | | | | | | | | | |
| 35 | 5 | 60 | 2 | 89 | 42 | 4,3 | 17,5 | 4,1 | 7,49 | 80,8 | 115 | 59 |
| 35 | 15 | 50 | 2 | 90 | 42 | 4,3 | 17,7 | 4,1 | 7,03 | 80,7 | 116 | 59 |
| 35 | 25 | 40 | 2 | 91 | 43 | 4,4 | 18,0 | 4,1 | 6,55 | 80,6 | 116 | 59 |
| 35 | 35 | 30 | 1 | 92 | 43 | 4,4 | 18,4 | 4,2 | 6,05 | 80,5 | 116 | 59 |
| 35 | 45 | 20 | 1 | 93 | 44 | 4,4 | 18,7 | 4,2 | 5,56 | 80,3 | 117 | 58 |
| 35 | 55 | 10 | 0 | 95 | 44 | 4,4 | 19,0 | 4,3 | 5,12 | 80,2 | 117 | 58 |

## Mélange HFO-1234yf / HFC-32 / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R404A | | | -5 | 77 | 50 | 5,2 | 23,0 | 4,5 | 0,37 | 79,7 | 100 | 48 |
| R407C | | | -1 | 89 | 45 | 4,5 | 19,8 | 4,4 | 4,46 | 79,9 | 114 | 56 |
| HFO-1234yf | HFC-32 | HFO-1234ze | | | | | | | | | | |
| 5 | 25 | 70 | 2,4 | 83 | 42 | 3,7 | 15,4 | 4,1 | 7,44 | 80,6 | 100 | 59 |
| 15 | 25 | 60 | 2,3 | 82 | 41 | 3,9 | 15,8 | 4,1 | 7,32 | 80,8 | 102 | 59 |
| 25 | 25 | 50 | 2,2 | 82 | 41 | 4,1 | 16,3 | 4,0 | 7,15 | 80,9 | 105 | 58 |
| 35 | 25 | 40 | 1,9 | 81 | 42 | 4,2 | 16,9 | 4,0 | 6,92 | 80,9 | 108 | 59 |
| 45 | 25 | 30 | 1,6 | 81 | 42 | 4,4 | 17,5 | 4,0 | 6,59 | 80,9 | 111 | 58 |
| 55 | 25 | 20 | 1,2 | 81 | 42 | 4,5 | 18,1 | 4,0 | 6,20 | 80,9 | 113 | 58 |
| 65 | 25 | 10 | 0,8 | 81 | 43 | 4,6 | 18,7 | 4,0 | 5,83 | 80,9 | 113 | 57 |
| | | | | | | | | | | | | |
| 5 | 35 | 60 | 2,6 | 88 | 42 | 4,4 | 17,5 | 4,0 | 7,63 | 80,9 | 116 | 59 |
| 15 | 35 | 50 | 2,4 | 87 | 41 | 4,5 | 18,0 | 4,0 | 7,40 | 81,0 | 119 | 59 |
| 25 | 35 | 40 | 2,1 | 87 | 42 | 4,7 | 18,7 | 3,9 | 7,05 | 81,1 | 122 | 59 |
| 35 | 35 | 30 | 1,6 | 87 | 42 | 4,9 | 19,4 | 4,0 | 6,58 | 81,0 | 124 | 58 |
| 45 | 35 | 20 | 1,0 | 87 | 43 | 5,1 | 20,3 | 4,0 | 6,01 | 80,9 | 125 | 57 |
| | | | | | | | | | | | | |
| 5 | 50 | 45 | 1,9 | 97 | 43 | 5,2 | 20,8 | 4,0 | 6,88 | 80,9 | 136 | 58 |
| 15 | 50 | 35 | 1,2 | 96 | 43 | 5,4 | 21,6 | 4,0 | 6,25 | 80,9 | 138 | 58 |
| 25 | 50 | 25 | 0,4 | 96 | 44 | 5,6 | 22,6 | 4,1 | 5,43 | 80,8 | 139 | 57 |

## Mélange HFC-32 / HFC-152a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R404A | | | -5 | 77 | 50 | 5,2 | 23,0 | 4,5 | 0,37 | 79,7 | 100 | 48 |
| R407C | | | -1 | 89 | 45 | 4,5 | 19,8 | 4,4 | 4,46 | 79,9 | 114 | 56 |
| HFC-32 | HFC-152a | HFO-1234ze | | | | | | | | | | |
| 25 | 5 | 70 | 2 | 85 | 41 | 3,6 | 15,1 | 4,2 | 7,26 | 80,4 | 99 | 60 |
| 25 | 15 | 60 | 2 | 87 | 41 | 3,5 | 15,0 | 4,3 | 6,82 | 80,2 | 100 | 60 |
| 25 | 25 | 50 | 1 | 90 | 41 | 3,5 | 15,2 | 4,3 | 6,42 | 80,1 | 100 | 60 |
| 25 | 35 | 40 | 1 | 92 | 42 | 3,5 | 15,3 | 4,4 | 5,98 | 79,8 | 101 | 60 |
| 25 | 45 | 30 | 1 | 95 | 42 | 3,4 | 15,4 | 4,5 | 5,54 | 79,6 | 101 | 60 |
| 25 | 55 | 20 | 0 | 98 | 42 | 3,4 | 15,4 | 4,5 | 5,15 | 79,4 | 100 | 60 |
| 25 | 65 | 10 | 0 | 100 | 42 | 3,3 | 15,3 | 4,6 | 4,84 | 79,1 | 100 | 60 |
| | | | | | | | | | | | | |
| 35 | 5 | 60 | 3 | 90 | 41 | 4,2 | 17,1 | 4,1 | 7,89 | 80,8 | 116 | 60 |
| 35 | 15 | 50 | 3 | 92 | 41 | 4,1 | 17,0 | 4,1 | 7,68 | 80,7 | 116 | 60 |
| 35 | 25 | 40 | 2 | 95 | 41 | 4,1 | 17,1 | 4,2 | 7,18 | 80,4 | 116 | 60 |
| 35 | 35 | 30 | 2 | 98 | 42 | 4,0 | 17,3 | 4,3 | 6,61 | 80,2 | 115 | 60 |
| 35 | 45 | 20 | 1 | 101 | 42 | 3,9 | 17,3 | 4,4 | 6,17 | 79,9 | 115 | 60 |
| 35 | 55 | 10 | 1 | 103 | 42 | 3,8 | 17,2 | 4,5 | 5,96 | 79,6 | 114 | 60 |
| | | | | | | | | | | | | |
| 50 | 5 | 45 | 2 | 98 | 42 | 5,0 | 20,3 | 4,0 | 7,48 | 80,9 | 135 | 59 |
| 50 | 15 | 35 | 2 | 101 | 42 | 4,9 | 20,3 | 4,1 | 7,22 | 80,7 | 135 | 59 |
| 50 | 25 | 25 | 2 | 105 | 43 | 4,8 | 20,4 | 4,2 | 6,59 | 80,3 | 133 | 58 |
| 50 | 35 | 15 | 1 | 108 | 43 | 4,7 | 20,4 | 4,4 | 6,20 | 80,0 | 132 | 58 |
| 50 | 45 | 5 | 1 | 111 | 43 | 4,6 | 20,2 | 4,4 | 6,34 | 79,8 | 131 | 58 |

Exemple 7 - Résultats pour un chauffage à température modérée, comparaison avec le R404a et le R407c

Le mélange HFC-32/ HFC-134a/ HFO-1234ze et le mélange HFO-1234yf/ HFC-32/ HFO-1234ze ne font pas partie de l'invention.

## Mélange HFC-32 / HFC-134a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAPc | %COPc / COPLorenz |
|---|---|---|---|---|---|---|---|---|---|---|---|---|
| **R404A** | | | -5 | 77 | 50 | 5,2 | 23,0 | 4,5 | 0,37 | 79,7 | 100 | 58 |
| **R407C** | | | -1 | 89 | 45 | 4,5 | 19,8 | 4,4 | 4,46 | 79,9 | 107 | 64 |
| HFC-32 | HFC-134a | HFO-1234ze | | | | | | | | | | |
| 35 | 5 | 60 | 2 | 89 | 42 | 4,3 | 17,5 | 4,1 | 7,49 | 80,8 | 104 | 66 |
| 35 | 15 | 50 | 2 | 90 | 42 | 4,3 | 17,7 | 4,1 | 7,03 | 80,7 | 105 | 66 |
| 35 | 25 | 40 | 2 | 91 | 43 | 4,4 | 18,0 | 4,1 | 6,55 | 80,6 | 105 | 66 |
| 35 | 35 | 30 | 1 | 92 | 43 | 4,4 | 18,4 | 4,2 | 6,05 | 80,5 | 106 | 65 |
| 35 | 45 | 20 | 1 | 93 | 44 | 4,4 | 18,7 | 4,2 | 5,56 | 80,3 | 106 | 65 |
| 35 | 55 | 10 | 0 | 95 | 44 | 4,4 | 19,0 | 4,3 | 5,12 | 80,2 | 107 | 65 |
| | | | | | | | | | | | | |
| 50 | 5 | 45 | 2 | 98 | 43 | 5,1 | 20,6 | 4,0 | 6,86 | 80,9 | 122 | 65 |
| 50 | 15 | 35 | 1 | 98 | 43 | 5,1 | 20,9 | 4,1 | 6,30 | 80,8 | 122 | 65 |
| 50 | 25 | 25 | 1 | 100 | 44 | 5,1 | 21,2 | 4,1 | 5,70 | 80,6 | 122 | 65 |

## Mélange HFO-1234yf / HFC-32 / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAPc | %COP / COPLorenz |
|---|---|---|---|---|---|---|---|---|---|---|---|---|
| **R404A** | | | -5 | 77 | 50 | 5,2 | 23,0 | 4,5 | 0,37 | 79,7 | 100 | 58 |
| **R407C** | | | -1 | 89 | 45 | 4,5 | 19,8 | 4,4 | 4,46 | 79,9 | 107 | 64 |
| HFO-1234yf | HFC-32 | HFO-1234ze | | | | | | | | | | |
| 35 | 25 | 40 | 1,9 | 81 | 42 | 4,2 | 16,9 | 4,0 | 6,92 | 80,9 | 100 | 67 |
| 45 | 25 | 30 | 1,6 | 81 | 42 | 4,4 | 17,5 | 4,0 | 6,59 | 80,9 | 102 | 66 |
| 55 | 25 | 20 | 1,2 | 81 | 42 | 4,5 | 18,1 | 4,0 | 6,20 | 80,9 | 104 | 66 |
| 65 | 25 | 10 | 0,8 | 81 | 43 | 4,6 | 18,7 | 4,0 | 5,83 | 80,9 | 105 | 65 |
| | | | | | | | | | | | | |
| 5 | 35 | 60 | 2,6 | 88 | 42 | 4,4 | 17,5 | 4,0 | 7,63 | 80,9 | 105 | 66 |
| 15 | 35 | 50 | 2,4 | 87 | 41 | 4,5 | 18,0 | 4,0 | 7,40 | 81,0 | 108 | 66 |
| 25 | 35 | 40 | 2,1 | 87 | 42 | 4,7 | 18,7 | 3,9 | 7,05 | 81,1 | 111 | 66 |
| 35 | 35 | 30 | 1,6 | 87 | 42 | 4,9 | 19,4 | 4,0 | 6,58 | 81,0 | 114 | 66 |
| 45 | 35 | 20 | 1,0 | 87 | 43 | 5,1 | 20,3 | 4,0 | 6,01 | 80,9 | 115 | 65 |
| | | | | | | | | | | | | |
| 5 | 50 | 45 | 1,9 | 97 | 43 | 5,2 | 20,8 | 4,0 | 6,88 | 80,9 | 124 | 65 |
| 15 | 50 | 35 | 1,2 | 96 | 43 | 5,4 | 21,6 | 4,0 | 6,25 | 80,9 | 126 | 65 |

## Mélange HFC-32 / HFC-152a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R404A | | | -5 | 77 | 50 | 5,2 | 23,0 | 4,5 | 0,37 | 79,7 | 100 | 58 |
| R407C | | | -1 | 89 | 45 | 4,5 | 19,8 | 4,4 | 4,46 | 79,9 | 107 | 64 |
| HFC-32 | HFC-152a | HFO-1234ze | | | | | | | | | | |
| 35 | 5 | 60 | 3 | 90 | 41 | 4,2 | 17,1 | 4,1 | 7,89 | 80,8 | 104 | 67 |
| 35 | 15 | 50 | 3 | 92 | 41 | 4,1 | 17,0 | 4,1 | 7,68 | 80,7 | 104 | 67 |
| 35 | 25 | 40 | 2 | 95 | 41 | 4,1 | 17,1 | 4,2 | 7,18 | 80,4 | 104 | 67 |
| 35 | 35 | 30 | 2 | 98 | 42 | 4,0 | 17,3 | 4,3 | 6,61 | 80,2 | 104 | 67 |
| 35 | 45 | 20 | 1 | 101 | 42 | 3,9 | 17,3 | 4,4 | 6,17 | 79,9 | 103 | 66 |
| 35 | 55 | 10 | 1 | 103 | 42 | 3,8 | 17,2 | 4,5 | 5,96 | 79,6 | 103 | 67 |
| | | | | | | | | | | | | |
| 50 | 5 | 45 | 2 | 98 | 42 | 5,0 | 20,3 | 4,0 | 7,48 | 80,9 | 122 | 66 |
| 50 | 15 | 35 | 2 | 101 | 42 | 4,9 | 20,3 | 4,1 | 7,22 | 80,7 | 122 | 66 |
| 50 | 25 | 25 | 2 | 105 | 43 | 4,8 | 20,4 | 4,2 | 6,59 | 80,3 | 121 | 65 |
| 50 | 35 | 15 | 1 | 108 | 43 | 4,7 | 20,4 | 4,4 | 6,20 | 80,0 | 120 | 65 |
| 50 | 45 | 5 | 1 | 111 | 43 | 4,6 | 20,2 | 4,4 | 6,34 | 79,8 | 119 | 65 |

Exemple 8 - Résultats pour un refroidissement à température modérée, comparaison avec le R410a

Le mélange HFC-32/ HFC-134a/ HFO-1234ze et le mélange HFO-1234yf/ HFC-32/ HFO-1234ze ne font pas partie de l'invention.

## Mélange HFC-32 / HFC-134a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R410A | | | -5 | 103 | 50 | 6,8 | 30,7 | 4,5 | 0,07 | 79,5 | 100 | 50 |
| HFC-32 | HFC-134a | HFO-1234ze | | | | | | | | | | |
| 65 | 5 | 30 | 0 | 107 | 45 | 5,8 | 24,0 | 4,1 | 5,22 | 80,6 | 100 | 57 |
| 65 | 15 | 20 | 0 | 108 | 45 | 5,8 | 24,3 | 4,2 | 4,52 | 80,4 | 99 | 57 |
| 65 | 25 | 10 | -1 | 110 | 46 | 5,8 | 24,6 | 4,3 | 3,93 | 80,3 | 99 | 56 |
| | | | | | | | | | | | | |
| 80 | 5 | 15 | -2 | 118 | 47 | 6,3 | 27,5 | 4,3 | 2,83 | 80,0 | 107 | 55 |
| 80 | 15 | 5 | -3 | 119 | 48 | 6,3 | 27,6 | 4,4 | 2,33 | 79,9 | 106 | 55 |
| | | | | | | | | | | | | |
| 90 | 5 | 5 | -4 | 126 | 49 | 6,6 | 29,6 | 4,5 | 1,23 | 79,6 | 111 | 54 |

## Mélange HFO-1234yf / HFC-32 / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R410A | | | -5 | 103 | 50 | 6,8 | 30,7 | 4,5 | 0,07 | 79,5 | 100 | 50 |
| HFO-1234yf | HFC-32 | HFO-1234ze | | | | | | | | | | |
| 5 | 65 | 30 | 0 | 107 | 45 | 5,9 | 24,4 | 4,1 | 5,08 | 80,6 | 101 | 57 |
| 15 | 65 | 20 | -1 | 107 | 46 | 6,1 | 25,5 | 4,2 | 3,94 | 80,4 | 101 | 56 |
| 25 | 65 | 10 | -2 | 107 | 47 | 6,2 | 26,7 | 4,3 | 2,70 | 80,2 | 100 | 54 |
| | | | | | | | | | | | | |
| 5 | 80 | 15 | -2 | 118 | 48 | 6,4 | 28,0 | 4,4 | 2,50 | 80,0 | 107 | 55 |
| 15 | 80 | 5 | -4 | 117 | 49 | 6,6 | 29,2 | 4,4 | 1,10 | 79,7 | 107 | 54 |
| | | | | | | | | | | | | |
| 5 | 90 | 5 | -4 | 125 | 49 | 6,7 | 30,2 | 4,5 | 0,74 | 79,6 | 111 | 54 |

## Mélange HFC-32 / HFC-152a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R410A | | | -5 | 103 | 50 | 6,8 | 30,7 | 4,5 | 0,07 | 79,5 | 100 | 50 |
| HFC-32 | HFC-152a | HFO-1234ze | | | | | | | | | | |
| 65 | 5 | 30 | 1 | 108 | 45 | 5,7 | 23,7 | 4,2 | 5,78 | 80,5 | 100 | 57 |
| 65 | 15 | 20 | 0 | 112 | 45 | 5,5 | 23,8 | 4,3 | 5,37 | 80,1 | 99 | 56 |
| 65 | 25 | 10 | 0 | 116 | 46 | 5,4 | 23,8 | 4,4 | 5,12 | 79,7 | 97 | 56 |
| | | | | | | | | | | | | |
| 80 | 5 | 15 | -2 | 120 | 47 | 6,2 | 27,3 | 4,4 | 3,27 | 79,9 | 106 | 55 |
| 80 | 15 | 5 | -2 | 124 | 48 | 6,0 | 27,2 | 4,5 | 3,36 | 79,5 | 105 | 54 |
| | | | | | | | | | | | | |
| 90 | 5 | 5 | -3 | 127 | 49 | 6,5 | 29,5 | 4,5 | 1,69 | 79,5 | 110 | 54 |

Exemple 9 - Résultats pour un chauffage à température modérée, comparaison avec le R410a

Le mélange HFC-32/ HFC-134a/ HFO-1234ze et le mélange HFO-1234yf/ HFC-32/ HFO-1234ze ne font pas partie de l'invention.

## Mélange HFC-32 / HFC-134a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAPc | %COPc / COPLorenz |
|---|---|---|---|---|---|---|---|---|---|---|---|---|
| R410A | | | -5 | 103 | 50 | 6,8 | 30,7 | 4,5 | 0,07 | 79,5 | 100 | 59 |
| HFC-32 | HFC-134a | HFO-1234ze | | | | | | | | | | |
| 80 | 5 | 15 | -2 | 118 | 47 | 6,3 | 27,5 | 4,3 | 2,83 | 80,0 | 103 | 62 |
| 80 | 15 | 5 | -3 | 119 | 48 | 6,3 | 27,6 | 4,4 | 2,33 | 79,9 | 103 | 63 |
| | | | | | | | | | | | | |
| 90 | 5 | 5 | -4 | 126 | 49 | 6,6 | 29,6 | 4,5 | 1,23 | 79,6 | 108 | 62 |

## Mélange HFO-1234yf / HFC-32 / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COP / COPLorenz |
|---|---|---|---|---|---|---|---|---|---|---|---|---|
| R410A | | | -5 | 103 | 50 | 6,8 | 30,7 | 4,5 | 0,07 | 79,5 | 100 | 59 |
| HFO-1234yf | HFC-32 | HFO-1234ze | | | | | | | | | | |
| 5 | 80 | 15 | -2 | 118 | 48 | 6,4 | 28,0 | 4,4 | 2,50 | 80,0 | 104 | 62 |
| 15 | 80 | 5 | -4 | 117 | 49 | 6,6 | 29,2 | 4,4 | 1,10 | 79,7 | 104 | 61 |
| | | | | | | | | | | | | |
| 5 | 90 | 5 | -4 | 125 | 49 | 6,7 | 30,2 | 4,5 | 0,74 | 79,6 | 108 | 61 |

## Mélange HFC-32 / HFC-152a / HFO-1234ze :

| Composition (%) | | | Temp sortie évap (°C) | Temp sortie comp (°C) | T sortie cond (°C) | evap P (bar) | cond P (bar) | Taux (p/p) | Glide | rendement comp | % CAP | %COPc / COPLorenz |
|---|---|---|---|---|---|---|---|---|---|---|---|---|
| R410A | | | -5 | 103 | 50 | 6,8 | 30,7 | 4,5 | 0,07 | 79,5 | 100 | 59 |
| HFC-32 | HFC-152a | HFO-1234ze | | | | | | | | | | |
| 80 | 5 | 15 | -2 | 120 | 47 | 6,2 | 27,3 | 4,4 | 3,27 | 79,9 | 103 | 62 |
| 80 | 15 | 5 | -2 | 124 | 48 | 6,0 | 27,2 | 4,5 | 3,36 | 79,5 | 101 | 62 |
| | | | | | | | | | | | | |
| 90 | 5 | 5 | -3 | 127 | 49 | 6,5 | 29,5 | 4,5 | 1,69 | 79,5 | 107 | 61 |

Exemple 10 - Données concernant les mélanges quasi-azéotropiques

Ne fait pas partie de l'invention.

Mélange HFC-32/HFO-123yf/FHO-1234ze :

| HFO-1234yf | HFC-32 | HFO-1234ze | Température (°C) | Psat liquide (bar) | Psat vapeur (bar) | % diff de pression |
|---|---|---|---|---|---|---|
| 20 | 70 | 10 | -5 | 6,4 | 5,9 | 9 |
| 28 | 70 | 2 | -5 | 6,5 | 6,2 | 5 |
| | | | | | | |
| 15 | 75 | 10 | -5 | 6,5 | 6,0 | 8 |
| 23 | 75 | 2 | -5 | 6,6 | 6,3 | 4 |
| | | | | | | |
| 5 | 80 | 15 | -5 | 6,5 | 5,9 | 9 |
| 10 | 80 | 10 | -5 | 6,6 | 6,1 | 7 |
| 18 | 80 | 2 | -5 | 6,7 | 6,5 | 3 |
| | | | | | | |
| 2 | 86 | 12 | -5 | 6,6 | 6,2 | 7 |
| 5 | 86 | 9 | -5 | 6,7 | 6,3 | 5 |
| 12 | 86 | 2 | -5 | 6,7 | 6,6 | 2 |
| | | | | | | |
| 2 | 90 | 8 | -5 | 6,7 | 6,4 | 4 |
| 5 | 90 | 5 | -5 | 6,8 | 6,6 | 3 |
| 8 | 90 | 2 | -5 | 6,8 | 6,7 | 1 |

Mélange HFC-32/HFC-134a/FHO-1234ze :

| HFC-32 | HFC-134a | HFO-1234ze | Température (°C) | Psat liquide (bar) | Psat vapeur (bar) | % diff de pression |
|---|---|---|---|---|---|---|
| 80 | 18 | 2 | -5 | 6,4 | 5,8 | 9 |
| | | | | | | |
| 86 | 2 | 12 | -5 | 6,6 | 6,1 | 8 |
| 86 | 5 | 9 | -5 | 6,6 | 6,1 | 7 |
| 86 | 12 | 2 | -5 | 6,6 | 6,1 | 6 |
| | | | | | | |
| 90 | 2 | 8 | -5 | 6,7 | 6,3 | 5 |
| 90 | 5 | 5 | -5 | 6,7 | 6,4 | 5 |
| 90 | 8 | 2 | -5 | 6,7 | 6,4 | 5 |

**Revendications**

**1.** Composition ternaire comprenant :

— de 25 à 50 % en poids de difluorométhane, de 2 à 35 % en poids de 1,1-difluoroéthane et de 15 à 73 % en poids de 1,3,3,3-tétrafluoropropène, idéalement de 35 à 50 % en poids de difluorométhane, de 2 à 10 % en poids de 1,1-difluoroéthane et de 40 à 63 % en poids de 1,3,3,3-tétrafluoropropène ; ou
— de 65 à 96 % en poids de difluorométhane, de 2 à 20 % en poids de 1,1-difluoroéthane et de 2 à 25 % en poids de 1,3,3,3-tétrafluoropropène, idéalement de 65 à 93 % en poids de difluorométhane, de 2 à 10 % en poids de 1,1-difluoroéthane et de 5 à 25 % en poids de 1,3,3,3-tétrafluoropropène ; ou

— de 65 à 93 % en poids de difluorométhane, de 2 à 30 % en poids de 1,1-difluoroéthane et de 5 à 33 % en poids de 1,3,3,3-tétrafluoropropène, idéalement de 65 à 93 % en poids de difluorométhane, de 2 à 10 % en poids de 1,1-difluoroéthane et de 5 à 33 % en poids de 1,3,3,3-tétrafluoropropène.

2. Utilisation d'une composition selon la revendication 1, en tant que fluide de transfert de chaleur dans un circuit de compression de vapeur.

3. Utilisation selon la revendication 2, dans laquelle le circuit de compression de vapeur comprend un échangeur de chaleur à contre-courant.

4. Composition de transfert de chaleur comprenant la composition selon la revendication 1 en tant que fluide de transfert de chaleur, et un ou plusieurs additifs choisis parmi les lubrifiants, les stabilisants, les tensioactifs, les agents traceurs, les agents fluorescents, les agents odorants, les agents de solubilisation et leurs mélanges.

5. Installation de transfert de chaleur comprenant un circuit de compression de vapeur contenant une composition selon la revendication 1 en tant que fluide de transfert de chaleur ou contenant une composition de transfert de chaleur selon la revendication 4.

6. Installation selon la revendication 5, comprenant un échangeur de chaleur à contre-courant.

7. Installation selon la revendication 5 ou 6, choisie parmi les installations mobiles ou stationnaires de chauffage par pompe à chaleur, de climatisation, de réfrigération et de congélation.

8. Procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon la revendication 1.

9. Procédé selon la revendication 8, qui est un procédé de refroidissement d'un fluide ou d'un corps, dans lequel la température du fluide ou du corps refroidi est de -40°C à -10°C, et de préférence de -35°C à -25°C, de manière plus particulièrement préférée de -30°C à -20°C, et dans lequel le fluide de transfert de chaleur comprend :

— de 25 à 50 % en poids de difluorométhane, de 2 à 35 % en poids de 1,1-difluoroéthane et de 15 à 73 % en poids de 1,3,3,3-tétrafluoropropène, idéalement de 35 à 50 % en poids de difluorométhane, de 2 à 10 % en poids de 1,1-difluoroéthane et de 40 à 63 % en poids de 1,3,3,3-tétrafluoropropène ; ou
— de 65 à 96 % en poids de difluorométhane, de 2 à 20 % en poids de 1,1-difluoroéthane et de 2 à 25 % en poids de 1,3,3,3-tétrafluoropropène, idéalement de 65 à 93 % en poids de difluorométhane, de 2 à 10 % en poids de 1,1-difluoroéthane et de 5 à 25 % en poids de 1,3,3,3-tétrafluoropropène.

10. Procédé selon la revendication 8, qui est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C, et dans lequel le fluide de transfert de chaleur comprend :

— de 2 à 20 % en poids de difluorométhane, de 2 à 85 % en poids de 1,1-difluoroéthane et de 10 à 96 % en poids de 1,3,3,3-tétrafluoropropène, idéalement de 5 à 15 % en poids de difluorométhane, de 2 à 35 % en poids de 1,1-difluoroéthane et de 50 à 93 % en poids de 1,3,3,3-tétrafluoropropène ; ou
— de 20 à 50 % en poids de difluorométhane, de 2 à 65 % en poids de 1,1-difluoroéthane et de 5 à 78 % en poids de 1,3,3,3-tétrafluoropropène, idéalement de 25 à 50 % en poids de difluorométhane, de 2 à 15 % en poids de 1,1-difluoroéthane et de 35 à 73 % en poids de 1,3,3,3-tétrafluoropropène ; ou
— de 65 à 93 % en poids de difluorométhane, de 2 à 30 % en poids de 1,1-difluoroéthane et de 5 à 33 % en poids de 1,3,3,3-tétrafluoropropène, idéalement de 65 à 93 % en poids de difluorométhane, de 2 à 10 % en poids de 1,1-difluoroéthane et de 5 à 33 % en poids de 1,3,3,3-tétrafluoropropène.

11. Procédé selon la revendication 8, qui est un procédé de chauffage d'un fluide ou d'un corps, dans lequel la température du fluide ou du corps chauffé est de 30°C à 80°C, et de préférence de 35°C à 55°C, de manière plus particulièrement préférée de 40°C à 50°C, et dans lequel le fluide de transfert de chaleur comprend :

— de 2 à 20 % en poids de difluorométhane, de 2 à 85 % en poids de 1,1-difluoroéthane et de 10 à 96 % en poids de 1,3,3,3-tétrafluoropropène, idéalement de 5 à 15 % en poids de difluorométhane, de 2 à 35 % en poids de 1,1-difluoroéthane et de 50 à 93 % en poids de 1,3,3,3-tétrafluoropropène ; ou
— de 20 à 50 % en poids de difluorométhane, de 2 à 65 % en poids de 1,1-difluoroéthane et de 5 à 78 % en poids de 1,3,3,3-tétrafluoropropène, idéalement de 25 à 50 % en poids de difluorométhane, de 2 à 15 % en poids de 1,1-difluoroéthane et de 35 à 73 % en poids de 1,3,3,3-tétrafluoropropène ; ou
— de 65 à 93 % en poids de difluorométhane, de 2 à 30 % en poids de 1,1-difluoroéthane et de 5 à 33 % en poids de 1,3,3,3-tétrafluoropropène, idéalement de 65 à 93 % en poids de difluorométhane, de 2 à 10 % en poids de 1,1-difluoroéthane et de 5 à 33 % en poids de 1,3,3,3-tétrafluoropropène.

**12.** Procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition selon la revendication 1.

**13.** Procédé selon la revendication 12, dans lequel le fluide de transfert de chaleur initial est un mélange ternaire de 52 % en poids de 1,1,1-trifluoroéthane, de 44 % en poids de pentafluoroéthane et de 4 % en poids de 1,1,1,2-tétrafluoroéthane ou un mélange ternaire de 52 % en poids de 1,1,1,2-tétrafluoroéthane, de 25 % en poids de pentafluoroéthane et de 23 % en poids de difluorométhane, et dans lequel le fluide de transfert de chaleur final comprend :

— de 25 à 50 % en poids de difluorométhane, de 2 à 35 % en poids de 1,1-difluoroéthane et de 15 à 73 % en poids de 1,3,3,3-tétrafluoropropène, idéalement de 35 à 50 % en poids de difluorométhane, de 2 à 10 % en poids de 1,1-difluoroéthane et de 40 à 63 % en poids de 1,3,3,3-tétrafluoropropène ; ou
— de 20 à 50 % en poids de difluorométhane, de 2 à 65 % en poids de 1,1-difluoroéthane et de 5 à 78 % en poids de 1,3,3,3-tétrafluoropropène, idéalement de 25 à 50 % en poids de difluorométhane, de 2 à 15 % en poids de 1,1-difluoroéthane et de 35 à 73 % en poids de 1,3,3,3-tétrafluoropropène.

**14.** Procédé selon la revendication 12, dans lequel le fluide de transfert de chaleur initial est un mélange binaire de 50 % en poids de difluorométhane et de 50 % en poids de pentafluoroéthane, et dans lequel le fluide de transfert de chaleur final comprend :

— de 65 à 96 % en poids de difluorométhane, de 2 à 20 % en poids de 1,1-difluoroéthane et de 2 à 25 % en poids de 1,3,3,3-tétrafluoropropène, idéalement de 65 à 93 % en poids de difluorométhane, de 2 à 10 % en poids de 1,1-difluoroéthane et de 5 à 25 % en poids de 1,3,3,3-tétrafluoropropène ; ou
— de 65 à 93 % en poids de difluorométhane, de 2 à 30 % en poids de 1,1-difluoroéthane et de 5 à 33 % en poids de 1,3,3,3-tétrafluoropropène, idéalement de 65 à 93 % en poids de difluorométhane, de 2 à 10 % en poids de 1,1-difluoroéthane et de 5 à 33 % en poids de 1,3,3,3-tétrafluoropropène.

**15.** Procédé selon la revendication 12, dans lequel le fluide de transfert de chaleur initial est du 1,1,1,2-tétrafluoroéthane, et dans lequel le fluide de transfert de chaleur final comprend :

— de 2 à 20 % en poids de difluorométhane, de 2 à 85 % en poids de 1,1-difluoroéthane et de 10 à 96 % en poids de 1,3,3,3-tétrafluoropropène, idéalement de 5 à 15 % en poids de difluorométhane, de 2 à 35 % en poids de 1,1-difluoroéthane et de 50 à 93 % en poids de 1,3,3,3-tétrafluoropropène.

**Patentansprüche**

**1.** Ternäre Zusammensetzung, umfassend:

- 25 bis 50 Gew.-% Difluormethan, 2 bis 35 Gew.-% 1,1-Difluorethan und 15 bis 73 Gew.-% 1,3,3,3-Tetrafluorpropen, idealerweise 35 bis 50 Gew.-% Difluormethan, 2 bis 10 Gew.-% 1,1-Difluorethan und 40 bis 63 Gew.-% 1,3,3,3-Tetrafluorpropen; oder
- 65 bis 96 Gew.-% Difluormethan, 2 bis 20 Gew.-% 1,1-Difluorethan und 2 bis 25 Gew.-% 1,3,3,3-Tetrafluorpropen, idealerweise 65 bis 93 Gew.-% Difluormethan, 2 bis 10 Gew.-% 1,1-Difluorethan und 5 bis 25 Gew.-% 1,3,3,3-Tetrafluorpropen; oder

- 65 bis 93 Gew.-% Difluormethan, 2 bis 30 Gew.-% 1,1-Difluorethan und 5 bis 33 Gew.-% 1,3,3,3-Tetrafluorpropen, idealerweise 65 bis 93 Gew.-% Difluormethan, 2 bis 10 Gew.-% 1,1-Difluorethan und 5 bis 33 Gew.-% 1,3,3,3-Tetrafluorpropen.

2. Verwendung einer Zusammensetzung nach Anspruch 1 als Wärmeübertragungsfluid in einem Dampfverdichtungskreislauf.

3. Verwendung nach Anspruch 2, wobei der Dampfverdichtungskreislauf einen Gegenstrom-Wärmeaustauscher umfasst.

4. Wärmeübertragungszusammensetzung, umfassend die Zusammensetzung nach Anspruch 1 als Wärmeübertragungsfluid und ein oder mehrere Additive, die aus Schmiermitteln, Stabilisatoren, Tensiden, Tracern, Fluoreszenzmitteln, Geruchsmitteln, Solubilisatoren und Mischungen davon ausgewählt sind.

5. Wärmeübertragungsanlage, umfassend einen Dampfverdichtungskreislauf, der eine Zusammensetzung nach Anspruch 1 als Wärmeübertragungsfluid enthält oder eine Wärmeübertragungszusammensetzung nach Anspruch 4 enthält.

6. Anlage nach Anspruch 5, umfassend einen Gegenstrom-Wärmeaustauscher.

7. Anlage nach Anspruch 5 oder 6, ausgewählt aus mobilen oder stationären Wärmepumpenheizanlagen, Klimaanlagen, Kühlanlagen und Gefrieranlagen.

8. Verfahren zum Erwärmen oder Abkühlen eines Fluids oder eines Körpers mittels eines Dampfverdichtungskreislaufs, der ein Wärmeübertragungsfluid enthält, bei dem man nacheinander das Wärmeübertragungsfluid verdampft, das Wärmeübertragungsfluid verdichtet, das Wärmefluid kondensiert und das Wärmeübertragungsfluid entspannt, wobei es sich bei dem Wärmeübertragungsfluid um eine Zusammensetzung nach Anspruch 1 handelt.

9. Verfahren nach Anspruch 8, bei dem es sich um ein Verfahren zum Abkühlen eines Fluids oder eines Körpers handelt, bei dem die Temperatur des abgekühlten Fluids oder Körpers -40 °C bis -10 °C, vorzugsweise -35 °C bis -25 °C und weiter bevorzugt -30 °C bis -20 °C beträgt und bei dem das Wärmeübertragungsfluid Folgendes umfasst:

- 25 bis 50 Gew.-% Difluormethan, 2 bis 35 Gew.-% 1,1-Difluorethan und 15 bis 73 Gew.-% 1,3,3,3-Tetrafluorpropen, idealerweise 35 bis 50 Gew.-% Difluormethan, 2 bis 10 Gew.-% 1,1-Difluorethan und 40 bis 63 Gew.-% 1,3,3,3-Tetrafluorpropen; oder
- 65 bis 96 Gew.-% Difluormethan, 2 bis 20 Gew.-% 1,1-Difluorethan und 2 bis 25 Gew.-% 1,3,3,3-Tetrafluorpropen, idealerweise 65 bis 93 Gew.-% Difluormethan, 2 bis 10 Gew.-% 1,1-Difluorethan und 5 bis 25 Gew.-% 1,3,3,3-Tetrafluorpropen.

10. Verfahren nach Anspruch 8, bei dem es sich um ein Verfahren zum Abkühlen eines Fluids oder eines Körpers handelt, bei dem die Temperatur des abgekühlten Fluids oder Körpers -15 °C bis 15 °C, vorzugsweise -10 °C bis 10 °C und weiter bevorzugt -5 °C bis 5 °C beträgt und bei dem das Wärmeübertragungsfluid Folgendes umfasst:

- 2 bis 20 Gew.-% Difluormethan, 2 bis 85 Gew.-% 1,1-Difluorethan und 10 bis 96 Gew.-% 1,3,3,3-Tetrafluorpropen, idealerweise 5 bis 15 Gew.-% Difluormethan, 2 bis 35 Gew.-% 1,1-Difluorethan und 50 bis 93 Gew.-% 1,3,3,3-Tetrafluorpropen; oder
- 20 bis 50 Gew.-% Difluormethan, 2 bis 65 Gew.-% 1,1-Difluorethan und 5 bis 78 Gew.-% 1,3,3,3-Tetrafluorpropen, idealerweise 25 bis 50 Gew.-% Difluormethan, 2 bis 15 Gew.-% 1,1-Difluorethan und 35 bis 73 Gew.-% 1,3,3,3-Tetrafluorpropen; oder
- 65 bis 93 Gew.-% Difluormethan, 2 bis 30 Gew.-% 1,1-Difluorethan und 5 bis 33 Gew.-% 1,3,3,3-Tetrafluorpropen, idealerweise 65 bis 93 Gew.-% Difluormethan, 2 bis 10 Gew.-% 1,1-Difluorethan und 5 bis 33 Gew.-% 1,3,3,3-Tetrafluorpropen.

11. Verfahren nach Anspruch 8, bei dem es sich um ein Verfahren zum Erwärmen eines Fluids oder eines Körpers handelt, bei dem die Temperatur des erwärmten Fluids oder Körpers 30 °C bis 80 °C, vorzugsweise 35 °C bis 55 °C und weiter bevorzugt 40 °C bis 50 °C beträgt und bei dem das Wärmeübertragungsfluid Folgendes umfasst:

- 2 bis 20 Gew.-% Difluormethan, 2 bis 85 Gew.-% 1,1-Difluorethan und 10 bis 96 Gew.-% 1,3,3,3-Tetrafluorpropen, idealerweise 5 bis 15 Gew.-% Difluormethan, 2 bis 35 Gew.-% 1,1-Difluorethan und 50 bis 93 Gew.-% 1,3,3,3-Tetrafluorpropen; oder
- 20 bis 50 Gew.-% Difluormethan, 2 bis 65 Gew.-% 1,1-Difluorethan und 5 bis 78 Gew.-% 1,3,3,3-Tetrafluorpropen, idealerweise 25 bis 50 Gew.-% Difluormethan, 2 bis 15 Gew.-% 1,1-Difluorethan und 35 bis 73 Gew.-% 1,3,3,3-Tetrafluorpropen; oder
- 65 bis 93 Gew.-% Difluormethan, 2 bis 30 Gew.-% 1,1-Difluorethan und 5 bis 33 Gew.-% 1,3,3,3-Tetrafluorpropen, idealerweise 65 bis 93 Gew.-% Difluormethan, 2 bis 10 Gew.-% 1,1-Difluorethan und 5 bis 33 Gew.-% 1,3,3,3-Tetrafluorpropen.

**12.** Verfahren zur Verringerung der Umweltbelastung durch eine Wärmeübertragungsanlage mit einem Dampfverdichtungskreislauf, der ein anfängliches Wärmeübertragungsfluid enthält, bei dem man das anfängliche Wärmeübertragungsfluid in dem Dampfverdichtungskreislauf durch ein letztendliches Übertragungsfluid ersetzt, wobei das letztendliche Übertragungsfluid ein kleineres GWP als das anfängliche Übertragungsfluid aufweist, wobei es sich bei dem letztendlichen Wärmeübertragungsfluid um eine Zusammensetzung nach Anspruch 1 handelt.

**13.** Verfahren nach Anspruch 12, wobei es sich bei dem anfänglichen Wärmeübertragungsfluid um ein ternäres Gemisch von 52 Gew.-% 1,1,1-Trifluorethan, 44 Gew.-% Pentafluorethan und 4 Gew.-% 1,1,1,2-Tetrafluorethan oder ein ternäres Gemisch von 52 Gew.-% 1,1,1,2-Tetrafluorethan, 25 Gew.-% Pentafluorethan und 23 Gew.- % Difluormethan handelt und wobei das letztendliche Wärmeübertragungsfluid Folgendes umfasst:

- 25 bis 50 Gew.-% Difluormethan, 2 bis 35 Gew.-% 1,1-Difluorethan und 15 bis 73 Gew.-% 1,3,3,3-Tetrafluorpropen, idealerweise 35 bis 50 Gew.-% Difluormethan, 2 bis 10 Gew.-% 1,1-Difluorethan und 40 bis 63 Gew.-% 1,3,3,3-Tetrafluorpropen; oder
- 20 bis 50 Gew.-% Difluormethan, 2 bis 65 Gew.-% 1,1-Difluorethan und 5 bis 78 Gew.-% 1,3,3,3-Tetrafluorpropen, idealerweise 25 bis 50 Gew.-% Difluormethan, 2 bis 15 Gew.-% 1,1-Difluorethan und 35 bis 73 Gew.-% 1,3,3,3-Tetrafluorpropen.

**14.** Verfahren nach Anspruch 12, wobei es sich bei dem anfänglichen Wärmeübertragungsfluid um ein binäres Gemisch von 50 Gew.-% Difluormethan und 50 Gew.-% Pentafluorethan handelt und wobei das letztendliche Wärmeübertragungsfluid Folgendes umfasst:

- 65 bis 96 Gew.-% Difluormethan, 2 bis 20 Gew.-% 1,1-Difluorethan und 2 bis 25 Gew.-% 1,3,3,3-Tetrafluorpropen, idealerweise 65 bis 93 Gew.-% Difluormethan, 2 bis 10 Gew.-% 1,1-Difluorethan und 5 bis 25 Gew.-% 1,3,3,3-Tetrafluorpropen; oder
- 65 bis 93 Gew.-% Difluormethan, 2 bis 30 Gew.-% 1,1-Difluorethan und 5 bis 33 Gew.-% 1,3,3,3-Tetrafluorpropen, idealerweise 65 bis 93 Gew.-% Difluormethan, 2 bis 10 Gew.-% 1,1-Difluorethan und 5 bis 33 Gew.-% 1,3,3,3-Tetrafluorpropen.

**15.** Verfahren nach Anspruch 12, wobei es sich bei dem anfänglichen Wärmeübertragungsfluid um 1,1,1,2-Tetrafluorethan handelt und wobei das letztendliche Wärmeübertragungsfluid Folgendes umfasst:

- 2 bis 20 Gew.-% Difluormethan, 2 bis 85 Gew.-% 1,1-Difluorethan und 10 bis 96 Gew.-% 1,3,3,3-Tetrafluorpropen, idealerweise 5 bis 15 Gew.-% Difluormethan, 2 bis 35 Gew.-% 1,1-Difluorethan und 50 bis 93 Gew.-% 1,3,3,3-Tetrafluorpropen.

## Claims

**1.** Ternary composition comprising:

- from 25 to 50% by weight of difluoromethane, from 2 to 35% by weight of 1,1-difluoroethane and from 15 to 73% by weight of 1,3,3,3-tetrafluoropropene, ideally from 35 to 50% by weight of difluoromethane, from 2 to 10% by weight of 1,1-difluoroethane and from 40 to 63% by weight of 1,3,3,3-tetrafluoropropene; or
- from 65 to 96% by weight of difluoromethane, from 2 to 20% by weight of 1,1-difluoroethane and from 2 to 25% by weight of 1,3,3,3-tetrafluoropropene, ideally from 65 to 93% by weight of difluoromethane, from 2 to 10% by weight of 1,1-difluoroethane and from 5 to 25% by weight of 1,3,3,3-tetrafluoropropene; or
- from 65 to 93% by weight of difluoromethane, from 2 to 30% by weight of 1,1-difluoroethane and from 5 to 33% by weight of 1,3,3,3-tetrafluoropropene, ideally from 65 to 93% by weight of difluoromethane, from 2 to 10% by weight of 1,1-difluoroethane and from 5 to 33% by weight of 1,3,3,3-tetrafluoropropene.

2. Use of a composition according to Claim 1, as a heat-transfer fluid in a vapour compression circuit.

3. Use according to Claim 2, in which the vapour compression circuit comprises a countercurrent heat exchanger.

4. Heat-transfer composition comprising the composition according to Claim 1 as a heat-transfer fluid, and one or more additives selected from lubricants, stabilizers, surfactants, tracer agents, fluorescent agents, odorizing agents, solubilizing agents and mixtures thereof.

5. Heat-transfer equipment comprising a vapour compression circuit containing a composition according to Claim 1 as a heat-transfer fluid or containing a heat-transfer composition according to Claim 4.

6. Equipment according to Claim 5, comprising a countercurrent heat exchanger.

7. Equipment according to Claim 5 or 6, selected from mobile or stationary equipment for heating via a heat pump, for air conditioning, for refrigeration and for freezing.

8. Process for heating or cooling a fluid or a body by means of a vapour compression circuit containing a heat-transfer fluid, said process successively comprising the evaporation of the heat-transfer fluid, the compression of the heat-transfer fluid, the condensation of the heat fluid and the expansion of the heat-transfer fluid, in which the heat-transfer fluid is a composition according to Claim 1.

9. Process according to Claim 8, which is a process for cooling a fluid or a body, in which the temperature of the cooled fluid or body is from -40°C to -10°C, and preferably from -35°C to -25°C, more particularly preferably from -30°C to -20°C, and in which the heat-transfer fluid comprises:

- from 25 to 50% by weight of difluoromethane, from 2 to 35% by weight of 1,1-difluoroethane and from 15 to 73% by weight of 1,3,3,3-tetrafluoropropene, ideally from 35 to 50% by weight of difluoromethane, from 2 to 10% by weight of 1,1-difluoroethane and from 40 to 63% by weight of 1,3,3,3-tetrafluoropropene; or
- from 65 to 96% by weight of difluoromethane, from 2 to 20% by weight of 1,1-difluoroethane and from 2 to 25% by weight of 1,3,3,3-tetrafluoropropene, ideally from 65 to 93% by weight of difluoromethane, from 2 to 10% by weight of 1,1-difluoroethane and from 5 to 25% by weight of 1,3,3,3-tetrafluoropropene.

10. Process according to Claim 8, which is a process for cooling a fluid or a body, in which the temperature of the cooled fluid or body is from -15°C to 15°C, and preferably from -10°C to 10°C, more particularly preferably from -5°C to 5°C, and in which the heat-transfer fluid comprises:

- from 2 to 20% by weight of difluoromethane, from 2 to 85% by weight of 1,1-difluoroethane and from 10 to 96% by weight of 1,3,3,3-tetrafluoropropene, ideally from 5 to 15% by weight of difluoromethane, from 2 to 35% by weight of 1,1-difluoroethane and from 50 to 93% by weight of 1,3,3,3-tetrafluoropropene; or
- from 20 to 50% by weight of difluoromethane, from 2 to 65% by weight of 1,1-difluoroethane and from 5 to 78% by weight of 1,3,3,3-tetrafluoropropene, ideally from 25 to 50% by weight of difluoromethane, from 2 to 15% by weight of 1,1-difluoroethane and from 35 to 73% by weight of 1,3,3,3-tetrafluoropropene; or
- from 65 to 93% by weight of difluoromethane, from 2 to 30% by weight of 1,1-difluoroethane and from 5 to 33% by weight of 1,3,3,3-tetrafluoropropene, ideally from 65 to 93% by weight of difluoromethane, from 2 to 10% by weight of 1,1-difluoroethane and from 5 to 33% by weight of 1,3,3,3-tetrafluoropropene.

11. Process according to Claim 8, which is a process for heating a fluid or a body, in which the temperature of the heated fluid or body is from 30°C to 80°C, and preferably from 35°C to 55°C, more particularly preferably from 40°C to 50°C, and in which the heat-transfer fluid comprises:

- from 2 to 20% by weight of difluoromethane, from 2 to 85% by weight of 1,1-difluoroethane and from 10 to 96% by weight of 1,3,3,3-tetrafluoropropene, ideally from 5 to 15% by weight of difluoromethane, from 2 to 35% by weight of 1,1-difluoroethane and from 50 to 93% by weight of 1,3,3,3-tetrafluoropropene; or
- from 20 to 50% by weight of difluoromethane, from 2 to 65% by weight of 1,1-difluoroethane and from 5 to 78% by weight of 1,3,3,3-tetrafluoropropene, ideally from 25 to 50% by weight of difluoromethane, from 2 to 15% by weight of 1,1-difluoroethane and from 35 to 73% by weight of 1,3,3,3-tetrafluoropropene; or
- from 65 to 93% by weight of difluoromethane, from 2 to 30% by weight of 1,1-difluoroethane and from 5 to 33% by weight of 1,3,3,3-tetrafluoropropene, ideally from 65 to 93% by weight of difluoromethane, from 2 to 10% by weight of 1,1-difluoroethane and from 5 to 33% by weight of 1,3,3,3-tetrafluoropropene.

12. Process for reducing the environmental impact of a piece of heat-transfer equipment comprising a vapour compression circuit containing an initial heat-transfer fluid, said process comprising a step of replacing the initial heat-transfer fluid in the vapour compression circuit with a final transfer fluid, the final transfer fluid having a GWP lower than the initial heat-transfer fluid, in which the final heat-transfer fluid is a composition according to Claim 1.

13. Process according to Claim 12, in which the initial heat-transfer fluid is a ternary mixture of 52% by weight of 1,1,1-trifluoroethane, 44% by weight of pentafluoroethane and 4% by weight of 1,1,1,2-tetrafluoroethane or a ternary mixture of 52% by weight of 1,1,1,2-tetrafluoroethane, 25% by weight of pentafluoroethane and 23% by weight of difluoromethane, and in which the final heat-transfer fluid comprises:

- from 25 to 50% by weight of difluoromethane, from 2 to 35% by weight of 1,1-difluoroethane and from 15 to 73% by weight of 1,3,3,3-tetrafluoropropene, ideally from 35 to 50% by weight of difluoromethane, from 2 to 10% by weight of 1,1-difluoroethane and from 40 to 63% by weight of 1,3,3,3-tetrafluoropropene; or
- from 20 to 50% by weight of difluoromethane, from 2 to 65% by weight of 1,1-difluoroethane and from 5 to 78% by weight of 1,3,3,3-tetrafluoropropene, ideally from 25 to 50% by weight of difluoromethane, from 2 to 15% by weight of 1,1-difluoroethane and from 35 to 73% by weight of 1,3,3,3-tetrafluoropropene.

14. Process according to Claim 12, in which the initial heat-transfer fluid is a binary mixture of 50% by weight of difluoromethane and 50% by weight of pentafluoroethane, and in which the final heat-transfer fluid comprises:

- from 65 to 96% by weight of difluoromethane, from 2 to 20% by weight of 1,1-difluoroethane and from 2 to 25% by weight of 1,3,3,3-tetrafluoropropene, ideally from 65 to 93% by weight of difluoromethane, from 2 to 10% by weight of 1,1-difluoroethane and from 5 to 25% by weight of 1,3,3,3-tetrafluoropropene; or
- from 65 to 93% by weight of difluoromethane, from 2 to 30% by weight of 1,1-difluoroethane and from 5 to 33% by weight of 1,3,3,3-tetrafluoropropene, ideally from 65 to 93% by weight of difluoromethane, from 2 to 10% by weight of 1,1-difluoroethane and from 5 to 33% by weight of 1,3,3,3-tetrafluoropropene.

15. Process according to Claim 12, in which the initial heat-transfer fluid is 1,1,1,2-tetrafluoroethane, and in which the initial heat-transfer fluid comprises:

- from 2 to 20% by weight of difluoromethane, from 2 to 85% by weight of 1,1-difluoroethane and from 10 to 96% by weight of 1,3,3,3-tetrafluoropropene, ideally from 5 to 15% by weight of difluoromethane, from 2 to 35% by weight of 1,1-difluoroethane and from 50 to 93% by weight of 1,3,3,3-tetrafluoropropene.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007002625 A
- WO 2007126414 A
- WO 2009107364 A
- WO 2009110228 A
- WO 2009116282 A
- US 20090158771 A
- WO 2009150763 A

- WO 2010000993 A
- WO 2010000994 A
- US 20080314073 A
- US 2006243944 A
- WO 2010059677 A
- WO 2011101621 A
- WO 2011101608 A

**Littérature non-brevet citée dans la description**

- The scientific assessment of ozone depletion. World Meteorological Association's Global Ozone Research and Monitoring Project, 2002